(19) Europäisches Patentamt
European Patent Office
Office européen des brevets

(11) EP 2 136 242 A1

(12) # EUROPEAN PATENT APPLICATION
published in accordance with Art. 153(4) EPC

(43) Date of publication:
**23.12.2009 Bulletin 2009/52**

(21) Application number: **08740151.9**

(22) Date of filing: **03.04.2008**

(51) Int Cl.:
***G02F 1/133*** *(2006.01)* ***G02F 1/141*** *(2006.01)*

(86) International application number:
**PCT/JP2008/057050**

(87) International publication number:
**WO 2008/126881 (23.10.2008 Gazette 2008/43)**

(84) Designated Contracting States:
**AT BE BG CH CY CZ DE DK EE ES FI FR GB GR HR HU IE IS IT LI LT LU LV MC MT NL NO PL PT RO SE SI SK TR**

(30) Priority: **06.04.2007 JP 2007100752**

(71) Applicant: **Nano Loa, Inc.**
**Kawasaki-shi**
**Kanagawa 2130012 (JP)**

(72) Inventor: **HORI, Tetsuro**
**Fuchu-shi**
**Tokyo 183-0005 (JP)**

(74) Representative: **Cohausz & Florack**
**Patent- und Rechtsanwälte**
**Bleichstraße 14**
**40211 Düsseldorf (DE)**

(54) **LIQUID CRYSTAL DEVICE AND METHOD FOR DRIVING LIQUID CRYSTAL DEVICE**

(57) A liquid crystal device comprising, at least, a liquid crystal element comprising at least a pair of substrates and a liquid crystal material disposed between the pair of electrodes, and electric field-applying means for applying an electric field to the liquid crystal element. The electric field-applying means applies a reverse electric field ($-T_{INT}$) so as to cancel an orientation energy difference ($T_{INT}$) depending upon relative directions between the applied electric field and aligned liquid crystal molecular axis in the liquid crystal element. There is provided a liquid crystal device capable of effectively suppressing the reduction in contrast, even when the optical response speed is increased.

Fig.18

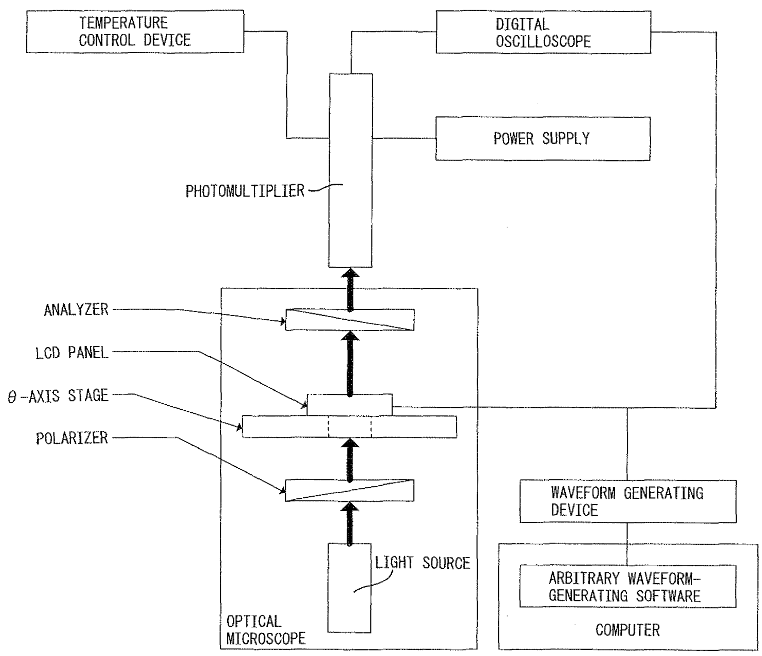


EP 2 136 242 A1

## Description

TECHNICAL FIELD

The present invention relates to a liquid crystal device capable of realizing an excellent optical response speed and an excellent display performance. More specifically, the present invention relates to a liquid crystal device capable of realizing an excellent optical response speed and capable of solving a slight delay in the optical response speed, especially delay in the case of low gray shade (or low gray scale).

In recent years, combined with the progress in technology aiming at a so-called "ubiquitous society", various needs for the display technique in general, such as high-speed response, downsizing and high display quality, are sophisticated. In order to meet these needs, also in the field of a liquid crystal device having advantage of ubiquitous application in view of downsizing and power saving, the demand for a liquid crystal device capable of realizing an excellent optical response speed and an excellent display performance is more and more increasing.

As described in the papers on the field sequential (or time-division) color display, such as International Workshop on Active Matrix Liquid Crystal Display in Tokyo (1999), "Ferroelectric Liquid Crystal Display with Si Backplane"; A. Mochizuki, pp. 181-184(Non-patent document 1); ibid., "A Full-color FLC Display Based on Field Sequential Color with TFT"s", T.Yoshihara, et al., pp. 185-188(Non-patent Document 2), the field sequential color display uses the same one pixel to represent red, green and blue colors in time sequentially. Fast optical response to realize the field sequential color is most important in this system. In order to show a natural color image without providing color breaking, at least three times faster optical response in liquid crystal switching may be usually required (so as to have a frame rate three times larger than that of the conventional micro-color filter color reproduction system).

Further, the display system by the field sequential color system using TFT and a nematic liquid crystal having an analog gray scale capability enables both high aperture ratio and high resolution as described in Denshi Gijyutsu (Electronics Technology)", July, 1998 in Tokyo "Liquid Crystal fast response technology and its application"; M. Okita, pp. 8-12(Non-patent Document 4).

However, this system could not fully use the advantage of high aperture ratio due to the nature of TN optical response profile as illustrated in Fig. 25. There is a very big difference in the backlight throughput efficiency between the conventional color filter with continuous emitting white backlight and the field sequential color system. In the conventional color display system, the aperture ratio of the panel directly represents the light throughput and image quality.

On the other hand, in the field sequential color system, the light throughput and image quality such as contrast ratio and color purity are determined as a combination of properties between liquid crystal optical response profile and backlight emission timing. Due to the fall profile in the TN-LCD, most of backlight emission timing is not used as optical response. Further, this "long tail fall" profile is indicative of possible color mixing, if the tail reaches the next frame backlight emission. In addition, due to light leakage at "black" level, a significant reduction in the contrast ratio tends to occur at the same time with color mixing, which may incur deterioration of the display performance.

[Non-patent Document 1] International Workshop on Active Matrix Liquid Crystal Display in Tokyo(1999), "Ferroelectric Liquid Crystal Display with Si Backplane" A. Mochizuki, pp. 181-184
[Non-patent Document 2] International Workshop on Active Matrix Liquid Crystal Display in Tokyo(1999), "A Full-color FLC Display Based on Field Sequential Color with TFT's", T.Yoshihara et al., pp. 185-188
[Non-patent Document 3] Denshi Gijyutsu (Electronics Technology)", July, 1998 in Tokyo "Liquid Crystal fast response technology and its application"; M. Okita, pp.8-12

DISCLOSURE OF THE INVENTION

An object of the present invention is to provide a liquid crystal device capable of solving the problem encountered in the prior art.

Another object of the present invention is to provide a liquid crystal device capable of effectively suppressing a reduction in contrast (especially, a reduction in contrast at a low gray shade).

As a result of earnest study, the present inventors have found that, in the case of a liquid crystal device capable of high-speed operation, a reduction in the contrast is provided due to an orientation energy difference ($T_{INT}$) depending upon relative directions between the applied electric field and aligned liquid crystal molecular axis in the liquid crystal element as a constituent element of the liquid crystal device.

As a result of further study, the present inventors have also found that it is very effective in attaining the above-mentioned object to apply a reverse electric field (i.e., s-application of electric field: $-T_{INT}$) so as to cancel an orientation energy difference ($T_{INT}$) depending upon relative directions between the applied electric field and aligned liquid crystal molecular axis in the liquid crystal element.

The liquid crystal device according to the present invention is base on the above discovery. More specifically,

the liquid crystal device according to the present invention comprises: at least,
a liquid crystal element capable of operated at high-speed; and electric field-applying means for applying an electric field to the liquid crystal element; the liquid crystal element comprising, at least, a pair of substrates, and a liquid crystal material disposed therebetween;
wherein the electric field-applying means is capable of applying an electric field ($-T_{INT}$) in a reverse direction so as to cancel a difference ($T_{INT}$) depending upon relative directions between the applied electric field and aligned liquid crystal molecular axis in the liquid crystal element.

The present invention also provides a method of driving a liquid crystal device comprising, at least, a liquid crystal element and electric field-applying means for applying an electric field to the liquid crystal element; the liquid crystal element comprising, at least, a pair of substrates and a liquid crystal material disposed between the pair of electrodes;
wherein a reverse electric field ($-T_{INT}$) is applied from the electric field-applying means to the liquid crystal element, so as to cancel an orientation energy difference ($T_{INT}$) depending upon relative directions between the applied electric field and aligned liquid crystal molecular axis in the liquid crystal element.

Hereinbelow, with respect to the liquid crystal device according to the present invention having the above-mentioned constitution, there will be described a mechanism of the operation thereof presumed by the present inventors, while comparing the mechanism in the present invention with that other liquid crystal devices.

(Internal Electric Field by Interfacial Polarization)

The liquid crystal display is a display where a change in optical property resultant from a change in the liquid crystal molecular alignment is converted into a visual change. Accordingly, it may be very important in the liquid crystal display technology to obtain a desired initial molecular alignment.

Heretofore, in the liquid crystal display technology, various techniques such as mechanical rubbing method, SiO vapor deposition method and chemical treating method have been proposed as a technique for obtaining a desired liquid crystal molecular alignment.

Among these techniques, for example, in the mechanical rubbing method, a liquid crystal-aligning ability may be imparted to an alignment film or cell substrate by rubbing directly a liquid crystal cell substrate or an alignment film disposed on the substrate, with a nonwoven fabric or the like. However, in this mechanical rubbing technique, it physically impossible to create complete the same surface state in the upper and lower substrates. For example, it may be easily understood that in an LCD device using a thin-film transistor for one substrate, the alignment film state differs between upper and lower substrates according to irregularities or unevenness in the substrate.

According to the theory on general physical property of a dielectric material, as illustrated in the schematic cross-sectional view of Fig. 1, surface charge accumulation involving a time lag is generated in the vicinity of interface at which different dielectric materials are contacted, and this is known as interfacial polarization. Assuming that the dielectric constant and electrical conductivity of each material are $\varepsilon_0$ and $\sigma_0$, or $\varepsilon_1$ and $\sigma_1$, respectively, the generated surface charge density (p) can be expressed by the following formula (1):

$$\rho = J\left(\frac{\varepsilon_{AL}}{\sigma_{AL}} - \frac{\varepsilon_{LC}}{\sigma_{LC}}\right) \quad \cdots\cdots\cdots \quad (1)$$

In the above formula (1), J is the component of a current density flowing in the direction perpendicular to the interface. It may be understood from formula (1) that the surface charge (p) generated depends on the difference in the ratio of dielectric constant to electric conductivity in each material.

Further, in an actual liquid crystal display, as illustrated in the schematic cross-sectional view of Fig. 2, it may be understood that unless the liquid crystal layers and alignment films in the vicinity of respective interfaces of upper and lower substrates have utterly the same dielectric constant and electrical conductivity, the interfacial polarization generated in the substrate cannot be prevented from differing between respective substrates and is more or less present macroscopically as an internal electric field in the inside of substrates. Particularly, as the strength of an externally applied electric field comes close to the strength of the internal electric field, a state of an electric field with intended strength being not applied to the liquid crystal is produced and this may affect the electro-optical response for controlling the gray shade.

(Conventional Technology and Effect of Slight Delay in Optical Response in PSS-LCD)

For example, in a twisted nematic liquid crystal display (hereinafter simply referred to as "TN-LCD") originally exhibiting a low-seed response, the slight delay in electro-optical response raises no particular problem. According to the knowledge and investigation of the present inventors, this may presumably be considered for the following reasons.

That is, TN-LCD is a technique where the light intensity continuously changes in general according to the effective value of an applied voltage as illustrated in Fig. 3 (namely, a technique capable of showing an analog gray scale). The motion video image reconfiguration time generally required is supposed to be usually about 16.7 msec at 60 Hz, but TN-LCD has as significantly low electro-optical response speed as about 30 msec and is limited in its application and therefore, in fact, the slight delay in electro-optical response has been heretofore ignored. For example, as illustrated in the graph of Fig. 4, when the delay time with respect to the frame rate is sufficiently small, the light leakage as an accumulation of delays becomes small. On the other hand, as illustrated in the graph of Fig. 5, in the usage having a "higher" frame rate, light leakage as an accumulation of delays may give rise to the reduction in contrast.

Also, as illustrated in the graph of Fig. 6, TN-LCD has a threshold value of the Freedericksz transition of about 1 V and therefore, the delay in optical response particularly at a low voltage raises substantially no problem.

On the other hand, a ferroelectric liquid crystal display (hereinafter simply referred to as "FLCD") is generally known to respond at a high speed. In this FLCD, as illustrated in the graph of Fig. 7, the light intensity may be generally not changed by the strength of the applied electric field, and the distinction between brightness and darkness is dependent only on the polarity of the applied electric field. In the case of FLCD, as illustrated in the schematic perspective view of Fig. 8, spontaneous polarization is present and therefore, depolarization field is generated as one of actions to compensate for the spontaneous polarization of the liquid crystal itself. This depolarization field acts as an "internal electric field" discussed in the present invention.

The technology of polarization shielded smectic Liquid crystal display (hereinafter simply referred to as "PSS-LCD"; for details of this PSS-LCD, for example, Kohyo (National Publication of Translated Version) No. 2006-515935 may be referred to) previously proposed by the present inventors is a technique where a liquid crystal element not having the above-described spontaneous polarization can be obtained and this liquid crystal element can show an electro-optical response at about 150 microseconds and can continuously display a gray shade scale according to the applied voltage. In the PSS-LCD, "applying a reverse electric field" according to the present invention may be particularly effective (for example, from the standpoint of suppressing the performance deterioration due to a slight delay in optical response speed in the case of low gray shade).

BRIEF DESCRIPTION OF THE DRAWINGS

Fig. 1 is a schematic cross-sectional view illustrating surface polarization.

Fig. 2 is a schematic cross-sectional view illustrating an internal electric field by upper and lower substrates.

Fig. 3 is a graph illustrating one example of the electro-optical response in TN-LCD.

Fig. 4 is a graph illustrating the time occupied by a delay time in a frame in a low-speed response LCD.

Fig. 5 is a graph schematically illustrating one example of the time occupied by a delay time in a frame in a high-speed response LCD.

Fig. 6 is a graph schematically illustrating one example of the electro-optical response in LCD having a threshold value of 1 V.

Fig. 7 is a schematic cross-sectional view for illustrating the electro-optical response of FLCD.

Fig. 8 is a schematic perspective view illustrating one example of the relationship between FLCD alignment and spontaneous polarization.

Fig. 9 is a schematic perspective view illustrating a quadrupole moment.

Fig. 10 is a schematic perspective view illustrating an example of the coupling of a quadrupole moment and an external electric field.

Fig. 11 is a schematic cross-sectional view illustrating the behavior of a liquid crystal when the applied electric field flows in the same direction as the internal electric field direction and an external electric field becomes absent.

Fig. 12 illustrates the behavior of a liquid crystal when the applied electric field flows in the reverse direction to the internal electric field direction and an external electric field becomes absent.

Fig. 13 is a graph illustrating one example of the measurement results of electro-optical response at the application of a pulse wave.

Fig. 14 is a schematic cross-sectional view for illustrating the method of canceling an orientation energy due to an internal electric field.

Fig. 15 is a graph illustrating one example of the method for canceling an orientation energy due to application of

an external voltage.

Fig. 16 is a schematic perspective view illustrating one example of the pseudo dV/dt change due to liquid crystal alignment/position change and static electric field.

Fig. 17 is a schematic perspective view illustrating one example of the method for canceling an orientation energy with an internal electric field by controlling dV/dt (the change with time of an externally applied voltage).

Fig. 18 is a block diagram illustrating one example of the electro-optical response measuring apparatus.

Fig. 19 is a graph illustrating one example of the measurement results of electro-optical response delay improvement at the application of a backward pulse wave.

Fig. 20 is a graph illustrating one example of the measurement results of electro-optical response delay under the control of dV/dt of a backward pulse wave.

Fig. 21 is a graph illustrating one example of the measurement results of electro-optical response delay improvement by the control of dV/dt of a backward pulse wave.

Fig. 22 is a graph illustrating one example of the measurement results of electro-optical response delay at the application of a pulse wave.

Fig. 23 is a graph showing an example of the polarization witching current during molecular orientation switching under an applied triangular waveform voltage.

Fig. 24 is a graph showing an example of the polarization switching peak current during in the case of conventional SSFLCD panel.

Fig. 25 is a graph schematically illustrating an example of the TN optical response profile.

Fig. 26 is a graph schematically illustrating an example of the "rise" and "fall" of electro-optical response.

BEST MODE FOR CARRYING OUT THE INVENTION

The present invention is described in detail below by referring to the drawings, as desired. In the following description, "part(s)" and "%" representing a quantitative proportion or ratio are those based on mass, unless otherwise noted specifically.

(Liquid Crystal Device)

The liquid crystal device according to the present invention comprises, at least, a high-speed operable liquid crystal element; and electric field-applying means for applying an electric field to the liquid crystal element, wherein the liquid crystal element comprises, at least, a pair of substrates and a liquid crystal material disposed between the pair of electrodes. In the present invention, the electric field-applying means is capable of applying an electric field ($-T_{INT}$) in a reverse direction so as to cancel an orientation energy difference ($T_{INT}$) depending upon relative directions between the applied electric field and aligned liquid crystal molecular axis in the liquid crystal element. (Liquid Crystal Element)

The liquid crystal element applicable to the present invention is a high-speed operable liquid crystal element comprising at least a pair of substrates and a liquid crystal material disposed between the pair of substrates. The term "high-speed operable liquid crystal element" as used herein means a liquid crystal element capable of an electro-optical response having an electro-optical response fall time of 3 msec (milliseconds) or less. The liquid crystal element applicable to the present invention may be preferably a liquid crystal element capable of an electro-optical response with a fall time of 1 msec or less. The reasons therefor are as follows. (Definition of Fall Time)

Ideally, when the electro-optical response has a steep rise and fall profile as shown by the curve a of Fig. 26, a light-shielded state can be maintained for a sufficiently long time. However, in the case of requiring a long fall time as shown by the curve b, since reconfiguration of the next display (shown by the curve c) starts before reaching a completely light-shielded state, light leakage is generated and the contrast is reduced. Accordingly, the fall time as used herein is defined as a time until the light quantity of 100% becomes 0%.

(Definition of High-Speed Response)

To describe more specifically, the reconfiguration period of one screen in the broadcasting or video signal is 16.7 msec. In the field sequential color system, at least three times longer reconfiguration period of 5.6 msec is required. The high-speed response as used in the present invention means that the time until reaching the target brightness requires a response speed sufficiently faster than 5.6 msec. The response speed required as a fall time may be preferably a half of 5.6 msec, that is, 2.8 msec or less, and a speed sufficiently faster than 2.8 msec is more preferred. In the present invention, the "speed sufficiently faster than 2.8 msec" indicates a response speed of, for example, 1 msec or less (preferably 0.5 msec or less).

(Electric Field-applying means)

The electric field-applying means applicable to the present invention is not particularly be limited, as long as it is electric field-applying means capable of applying an electric field ($-T_{INT}$) in a reverse direction, so as to cancel an orientation energy difference ($T_{INT}$) depending upon relative directions between the applied electric field and aligned liquid crystal molecular axis in the liquid crystal element.

(Specific Example of Electric Field-applying means)

The electric field-applying means usable in the present invention may preferably comprise, for example, response speed analyzer for analyzing an electro-optical response speed of the liquid crystal element by utilizing transmission light having passed through the liquid crystal element, and electric field application regulator for regulating a voltage to be applied to the liquid crystal element, according to a signal from the response speed analyzer.

(Response Speed Analyzer)

The response speed analyzer may preferably comprise light-receiving means (e.g., PMT (photomultiplier)) for measuring transmission light having passed through the liquid crystal element, and analyzing means (e.g., digital oscilloscope, computer) for analyzing a signal from the light-receiving means.

(Electric Field-application Regulator)

The electric field-application regulator may preferably comprise waveform generator for generating a voltage to be applied to the liquid crystal element, and controller (e.g., computer) for controlling the waveform generator. The above-described analyzing means for analyzing a signal from the light-receiving means and this controller for controlling the waveform generator may be, for example, the same computer.

(Preferred Embodiment of Electric Field-applying means)

One example of the electric field-applying means suitably usable in the present invention is illustrated in the later-described block diagram of Fig. 18.

(Preferred Embodiment of Electric Field-applying means)

One example of the electric field-applying means suitably usable in the present invention is illustrated in the later-described block diagram of Fig. 18. An LCD panel to be measured is inserted between a polarizer and an analyzer which are arranged in cross-Nicole relationship, and for obtaining an angle providing the minimum light quantity of the transmission light, the arrangement angle of the LCD panel is determined by rotating the θ-axis stage.

An arbitrary waveform is applied to the LCD panel from a waveform generating device. Waveform data produced by a computer and an arbitrary waveform producing software installed in the computer is transferred to a waveform generating device from the computer and at the same time, the waveform generating device is controlled to perform the control of the applied waveform (e.g., pulse width, wave height value, waveform shape, period). The long tail fall profile of the electro-optical response in the vicinity of low gray shade scale is measured and the applied electric field waveform is controlled to minimize the fall, whereby electric field applying conditions for canceling an orientation energy difference ($T_{INT}$) can be obtained. The time until reaching the long tail fall can be defined according to the definition of the above-described fall time by comparing the time until achieving the brightness.

(Electro-Optical Response Delay in PSS-LCD)

The liquid crystal element that can be in particular suitably used in the present invention is PSS-LCD. In PSS-LCD using a liquid crystal with a molecular structure of lowest symmetry such as smectic C phase, a quadrupole moment is generated as illustrated in the schematic perspective view of Fig. 9, because permanent dipole moments in the molecule have different directions. An externally applied electric field couples with this quadrupole moment, whereby as illustrated in the schematic perspective view of Fig. 10, the vector direction of the quadrupole moment follows the direction of an applied electric field and the control of alignment by an electric field becomes possible.

As described above, also in PSS-LCD using a liquid crystal material in the form of not having spontaneous polarization as a bulk, an internal electric field is generated between a liquid crystal molecule near the interface and the alignment film material. This internal electric field couples with the quadrupole moment and thereby yields an energy

contributing to disturbing the alignment control. According to the knowledge and investigations of the present inventors, these can be rationally explained as follows.

(Internal Electric Field-Quadrupole Moment Coupling)

The schematic cross-sectional views of Figs. 11 and 12 each is a view schematically illustrating the movement of a liquid crystal molecule according to the electric field applying direction. Fig. 11 illustrates a state of an external electric field E=+V being applied in the same direction as the internal electric field generating direction at the point of t0. When the external electric field becomes E=0, the alignment is changed to t1 by an energy $T_0$ to return to the initial alignment position. As already described in Kohyo No. 06-515935 (corresponding to U.S. Application Publication No. 2004-196428, entitled "Liquid Crystal Display Device"), the total free energy density F of the liquid crystal molecular alignment in PSS-LCD can be expressed by the following formula (2):

$$F = \int_0^d (f_{elas} + f_{elec})dx + f_{surf} \qquad (2)$$

In formula (2), $f_{elas}$ is the eleastic energy density between molecules and $f_{surf}$ is the interfacial mutual energy. When the energy $f_{elec}$ by the electric field is changed, $f_{elas}$ and $f_{surf}$ participate in the alignment control so as to minimize F.

On the other hand, in the case of PSS-LCD having a quadrupole moment, similarly to TN-LCD, the alignment control energy T with respect to an electric field E can be expressed by the following fomula (3):

$$T = -\frac{1}{2}\Delta\varepsilon|E|^2 \qquad (3)$$

In formula (3), $\Delta\varepsilon$ represents the dielectric constant anisotropy of the liquid crystal material and E repessents the strength of the electric field.

In the case where an internal electric field is present in PSS-LCD, with respect to the energy to return to the initial alignment position, the quadrupole moment of a PSS liquid crystal molecule couples with the internal electric field and when the internal electric field strength $E_{INT}$ and the dielectric constant anisotropy of the liquid crystal material as a vector component are expresed by the following formula (4), the alignment control energy $T_{INT}$ of PSS-LCD can be expressed by the following formula (5):

$$\overrightarrow{\Delta\varepsilon} \qquad (4)$$

$$\overrightarrow{T_{INT}} = -\frac{1}{2}\overrightarrow{\Delta\varepsilon}|E_{INT}|^2 \qquad (5)$$

Accordingly, it is understood that the generated alignment control energy $T_{INT}$ is also a verctor component. In the case of Fig. 11, this alignment control energy $T_{INT}$ is found to be generated in the direction against the external electric field direction. Also, in the case of Fig. 12 where an external electric field is applied from the reverse direction, the energy $T_{INT}$ produced by an internal electric field is generated in the direction to reinforce To.

Assuming that the sum totals of energies participating in the alignment control in respective extrnal electric field applying directions are T(+) and T(-), these can be expressed by the following formulae (6) and (7):

$$T(+) = T_0 + T_{INT} \qquad (6)$$

$$T(-) = T_0 - T_{INT} \qquad (7)$$

Accordingly, the relationship of the following formula (8) is established:

$$T(+) < T(-) \qquad (8)$$

It is seen from formula (8) that a difference in the amount of energy contributing to optical response arises depending on the electric field applying direction. In view of the general law of motion, this energy difference affects the acceleration when a liquid crystal molecule moves from t0 to t1 in Figs. 11 and 12.

Based on the idea above, the electro-optical response in PSS-LCD is measured, as a result, as illustrated in the graph of Fig. 13, it is confirmed that the electro-optical response speed is subject to a delay in course of transition from E=+10 V (a state of a positive polarity electric field being applied) to E=0 V (a state of an applied electric field being absent).

This fact reveals that an internal electric field generated in PSS-LCD adversely affects the molecular alignment control by an externally applied electric field.

(Concept of Internal Electric Field Canceling Method in PSS-LCD)

As described above, an internal electric field generated in PSS-LCD gives rise to reduction in the electro-optical response speed by coupling with a quadrupole moment particularly when its strength is in proximity to the external electric field strength. In a normally black mode that is an operation mode of PSS-LCD operating, the optical response speed in a low gray shade can be compensated for by using the following means.

In the present invention, as illustrated by the schematic cross-sectional view of Fig. 14, with respect to an alignment control energy $T_{INT}$ generated by coupling of an internal electric field and a quadrupole moment, means of applying an external electric field capable of giving corresponding $-T_{INT}$ in the reverse direction is provided.

(One Example of Measure for Providing Energy)

The graph of Fig. 15 illustrates one example of the measure for providing a corresponding energy in the reverse direction by controlling an external electric field. In the case where an externally applied voltage becomes absent after applying a voltage $\pm$V expected to bring about an electro-optical response, the energy amount can be canceled by applying a voltage with reverse polarity, whereby the difference in the optical response speed can be compensated for.

The wave height value, pulse width and waveform shape of the applied waveform can be determined by the following procedure.

The long tail fall profile of electro-optical response in the vicinity of low gray shade scale is measured on a digital oscilloscope screen for displaying an electro-optical response and the applied pulse is controlled to minimize the fall. For example, the wave height value, pulse width or waveform shape is changed to minimize the long tail fall of the electro-optical response waveform in Fig. 26, whereby a pulse waveform for canceling the above-described energy amount and compensating the optical response speed difference can be determined.

(Modification of Concept of Internal Electric Field Canceling Method)

As the dV/dt (i.e., change in applied electric field with respect to time) is larger, the quadrupole moment in PSS-LCD more effectively couples with the applied electric field. Even when the strength of an internal electric field in the present invention is small, if the movement of a liquid crystal molecule is rapid, as illustrated in the schematic perspective view of Fig. 16, reinforcement of the quadruple moment is generated. The optical response delay attributable to an internal electric field is thereby more promoted.

Also in the internal electric field canceling method described above, as illustrated in the graph of Fig. 17, a large energy for canceling an energy generated resulting from coupling of an internal electric field and a quadrupole moment can be provided by applying an external electric field with large dV/dt.

(One Preferred Embodiment of (Electric Field-applying means)

One preferred embodiment of the electric field-applying means is illustrated in the block diagram of Fig. 18. In Fig. 18, the constitution of the apparatus system is as follows.

The output of a waveform generating device is divided into at least two or more flows and connected to an oscilloscope input terminal and an electrode part of an LCD panel to be measured. The output of a photomultiplier is connected to the input of an another channel of the oscilloscope. Also, the control board for controlling the waveform generating device is connected to a computer. The photomultiplier performs power supply and temperature control and therefore, is connected to a power source and a temperature control device. Thanks to this constitution, the applied

electric field can be controlled by the computer and an electro-optical response according to the applied electric field can be displayed in the oscilloscope waveform display part.

(One Preferred Embodiment of Each Device)

Specific examples of the devices constituting the apparatus system of Fig. 18 are as follows.
Photomultiplier (temperature control device, power source): manufactured by Hamamatsu Photonics K.K.
Digital oscilloscope: TDS2014 manufactured by Tektronix, Inc.
Waveform generating device: WF1946A manufactured by NF Corporation
Optical microscope: CS31 manufactured by Olympus Corporation
Arbitrary waveform producing software: LabView produced by National Instruments Japan Corporation
Computer: manufactured by HP (Hewlett-Packard)

(One Embodiment of Preferred Operation of Electric Field-applying means)

In the apparatus system of Fig. 18, its preferred operation mode is as follows.
An arbitrary voltage waveform pattern produced by the computer and the arbitrary waveform producing software installed in the computer is transferred to the arbitrary waveform generating device, and the arbitrary waveform generating device applies a voltage to an LCD panel between a polarizer and an analyzer disposed in 90° cross-Nicole arrangement.
In the apparatus system of Fig. 18, its preferred operation mode is as follows.
An arbitrary voltage waveform pattern produced by the computer and the arbitrary waveform producing software installed in the computer is transferred to the arbitrary waveform generating device, and the arbitrary waveform generating device applies a voltage to an LCD panel between a polarizer and an analyzer disposed in 90° cross-Nicole arrangement.
The arbitrary waveform producing software is a software capable of reprogramming (capable of alteration or modification), where a voltage waveform pattern as well as the wave height value, period and pulse width are stored in the form of a computer-readable file. The voltage waveform pattern is saved in an ASCII text format so that an arbitrary waveform pattern can be directly prepared. Between the computer and the arbitrary waveform generating device connected thereto, transfer of the waveform data and transmission of a command for controlling the arbitrary waveform generating device are performed, thereby controlling the arbitrary waveform applied to the LCD panel.
A desired pulse wave (for example, under the conditions of pulse width: 1 mSEC, period: 16.7 mSEC and externally applied voltage: ±10 V, voltage) is applied to the LCD panel from the arbitrary waveform generating device. At this time, a pulsed voltage with reverse polarity of -10 V and a pulse width of 50 μSEC is applied in the course of the voltage becoming 0 V from a +10 V voltage applied state, whereby the delay in electro-optical response is improved.
Such improvement of the electro-optical response delay can be confirmed, for example, by detecting transmission light having passed through the LCD panel by PMT (photomultiplier) and analyzing the signal from PMT by a digital oscilloscope. An operation of changing the waveform pattern produced in the computer based on the confirmed results so as to minimize the electro-optical response delay is repeated, whereby an optimal voltage application pattern can be specified.
Further, it is also possible to automate the operation of minimizing the electro-optical response delay by feedbacking the electro-optical response delay data observed by the digital oscilloscope to the computer.
A desired pulse wave (for example, under the conditions of pulse width: 1m SEC, period: 16.7 mSEC and externally applied voltage: ±10 V, voltage) is applied to the LCD panel from the arbitrary waveform generating device. At this time, a backward pulsed voltage of -10 V and a pulse width of 50 μSEC is applied in the course of the voltage becoming 0 V from a +10 V voltage applied state, whereby the delay in electro-optical response is improved.
Such improvement of the electro-optical response delay can be confirmed, for example, by detecting transmission light having passed through the LCD panel by PMT (photomultiplier) and analyzing the signal from PMT by a digital oscilloscope. The signal from PMT is fed back to the computer, so that based on the analysis result by the computer, the pulse wave from the arbitrary waveform generating device can be controlled.
In Fig. 18, the temperature control device is disposed for controlling the temperature of PMT.

(Liquid Crystal Element)

The liquid crystal element according to an embodiment of the present invention comprises at least a pair of substrates, and a liquid crystal material disposed between the pair of substrates.

(Liquid Crystal Material)

In the present invention, a liquid crystal material can be used without any particular limitation, as long as it is

a liquid crystal material capable of constituting an electro-optical element in which the optical axis azimuth is rotated in response to the strength and/or direction of an electric field to be applied thereto, for the application of the system of the present invention. Whether or not a certain liquid crystal material is usable in the present invention can be confirmed by the following "Confirmation Method for Optical Axis Azimuth Rotation". Also, in the present invention, a liquid crystal material capable of a predetermined high-speed response is suitably usable and whether or not a certain liquid crystal material can response at a sufficiently high speed can be confirmed by the following "Method of Confirming Response Time".

(Method of Confirming Optical Axis Azimuth Rotation)

An LCD panel to be measured is inserted between a polarizer and an analyzer which are arranged in cross-Nicole relationship, and for obtaining an angle providing the minimum light quantity of the transmitted light at the time of not applying a voltage, the arrangement angle of the LCD panel is determined by rotating the θ-axis stage. In the detection of transmitted light, for example, the transmitted light having passed through the LCD panel is detected, for example, by using PMT and the signal from PMT is analyzed by a digital oscilloscope, whereby the transmitted light can be confirmed.

(Method for Confirming Response Time)

Assuming that the quantity of transmitted light in a voltage applied state (for example, +10V) is 100%, the time until the quantity of transmitted light becomes 0% after transition from voltage application to voltage non-applied state (0 V) is specified, whereby the improvement of response time can be confirmed.

(PSS-LC)

The liquid crystal material which is preferably usable in the present invention is a PSS-LC, wherein the molecular initial alignment in the liquid crystal material has an almost parallel direction with respect to the alignment treatment direction; and the liquid crystal material shows substantially no spontaneous polarization which is at least perpendicular to a pair of substrates, under the absence of an externally applied voltage.

(Molecular initial alignment)

In the present invention, in the molecular initial alignment (or orientation) in the liquid crystal material, the major axis of the liquid crystal molecules has an almost parallel direction with respect to the alignment treatment direction for the liquid crystal molecules. The fact that the major axis of the liquid crystal molecules has an almost parallel direction with respect to the alignment treatment direction can be confirmed, e.g., by the following manner. In order to enable the liquid crystal device according to the present invention to exhibit a desirable display performance, the angle (absolute value) between the rubbing direction and the alignment direction of the liquid crystal molecules, which has been measured by the following method may preferably be 3 degrees or less, more preferably be 2 degrees or less, particularly 1 degree or less. In a strict sense, it is known that when a polymer alignment film such as polyimide film is subjected to rubbing, a birefringence is induced in the polyimide outermost layer, to thereby provide a slow optical axis. Further, in general, it is known that the major axis of the liquid crystal molecules are aligned in parallel with the slow optical axis. With respect to almost all of the polymer alignment films, it is known that a certain gap in the angle occurs between the rubbing direction and the slow optical axis. In general, the gap is relatively small and may be about 1-7 degrees.

However, this gap in the angle can be 90 degrees as in the case of polystylene as an extreme example.

Therefore, in the present invention, the angle between the rubbing direction and the alignment direction of the major axis (i.e., optical axis) of the liquid crystal molecules may preferably be 3 degree or less. At this time, the alignment direction of the major axis of the liquid crystal molecules, and the slow optical axis which has been provided in the polymer (such as polyimide) polymer alignment film by rubbing, etc., may preferably be 3 degrees or less, more preferably 2 degrees or less, particularly 1 degree or less.

As described above, in the present invention, the alignment treatment direction refers to the direction of the slow optical axis (in the polymer outermost layer) which determines the direction of the alignment of the liquid crystal molecule major axis.

<Method of measuring molecular initial alignment state for liquid crystal molecules>

In general, the major axis of liquid crystal molecules is in fair agreement with the optical axis. Therefore, when a liquid crystal panel is placed in a cross Nicole arrangement wherein a polarizer is disposed perpendicular to an analyzer,

the intensity of the transmitted light becomes the smallest when the optical axis of the liquid crystal is in fair agreement with the absorption axis of the analyzer. The direction of the initial alignment axis can be determined by a method wherein the liquid crystal panel is rotated in the cross Nicole arrangement while measuring the intensity of the transmitted light, whereby the angle providing the smallest intensity of the transmitted light can be determined.

<Method of measuring parallelism of direction of liquid crystal molecule major axis with direction of alignment treatment>

The direction of rubbing is determined by a set angle, and the slow optical axis of a polymer alignment film outermost layer which has been provided by the rubbing is determined by the kind of the polymer alignment film, the process for producing the film, the rubbing strength, etc. Therefore, when the extinction position is provided in parallel with the direction of the slow optical axis, it is confirmed that the molecule major axis, i.e., the optical axis of the molecules, is in parallel with the direction of the slow optical axis.

(Spontaneous polarization)

In the present invention, in initial molecular alignment, the spontaneous polarization (which is similar to the spontaneous polarization in the case of a ferroelectric liquid crystal) is not generated, at least with respect to the direction which is perpendicular to the substrate. In the present invention, the "initial molecular alignment providing substantially no spontaneous polarization is such that the spontaneous polarization does not occur" can be confirmed, e.g., by the following method.

<Method of measuring presence of spontaneous polarization perpendicular to the substrate>

In a case where the liquid crystal in a liquid crystal cell has a spontaneous polarization, particularly in a case where a spontaneous polarization is generated in the substrate direction in the initial state, namely in the direction perpendicular to the electric field direction in the initial state (i.e., under the absence of an external electric field), when a low-frequency triangular voltage (about 0.1 Hz) is applied to the liquid crystal cell, the direction of the spontaneous polarization is reversed from the upper direction into the lower direction, or from the lower direction into the upper direction, along with the change of the polarity of the applied voltage from positive into negative, or from negative into positive. Along with such an inversion, actual electric charge is transported (i.e., an electric current is generated). The spontaneous polarization is reversed, only when the polarity of the applied electric field is reversed. Therefore, there appears a peak-shaped electric current as shown in Fig. 13. The integral value of the peak-shaped electric current corresponds to the total quantity electric charges to be transported, i.e., the strength of the spontaneous polarization. When no peak-shaped electric current is observed in this measurement, the absence of the occurrence of the spontaneous polarization inversion is directly proved by such a phenomenon. Further, when a linear increase in the electric current as shown in Fig. 12 is observed, it is found that the major axis of the liquid crystal molecules is continuously or consecutively changed in the molecular alignment direction thereof, depending on the increase in the electric field intensity. In other words, in this case as shown in Fig. 12, it has been found that there occurs a change in the molecular alignment direction due to induced polarization, etc., depending on the intensity of the applied electric field.

(Substrate)

The substrate usable in the present invention is not particularly limited, as long as it can provide the above-mentioned specific "molecular initial alignment state". In other words, in the present invention, a suitable substrate can appropriately be selected, in view of the usage or application of LCD, the material and size thereof, etc. Specific examples thereof usable in the present invention are as follows.
A glass substrate having thereon a patterned a transparent electrode (such as ITO)
An amorphous silicon TFT-array substrate
A low-temperature poly-silicon TFT array substrate
A high-temperature poly-silicon TFT array substrate
A single-crystal silicon array substrate

(Preferred substrate examples)

Among these, it is preferred to use following substrate, in a case where the present invention is applied to a large-scale liquid crystal display panel.
An amorphous silicon TFT array substrate

(PSS-LC material)

The PSS-LC material usable in the present invention is not particularly limited as long as it can provide the above-mentioned specific "molecular initial alignment state". In other words, in the present invention, a suitable liquid crystal material can appropriately be selected, in view of the physical property, electric or display performance, etc. For example, various liquid crystal materials (including various ferroelectric or non-ferroelectric liquid crystal materials) as exemplified in a publication of may generally be used in the present invention. Specific preferred examples of such liquid crystal materials usable in the present invention are as follows.

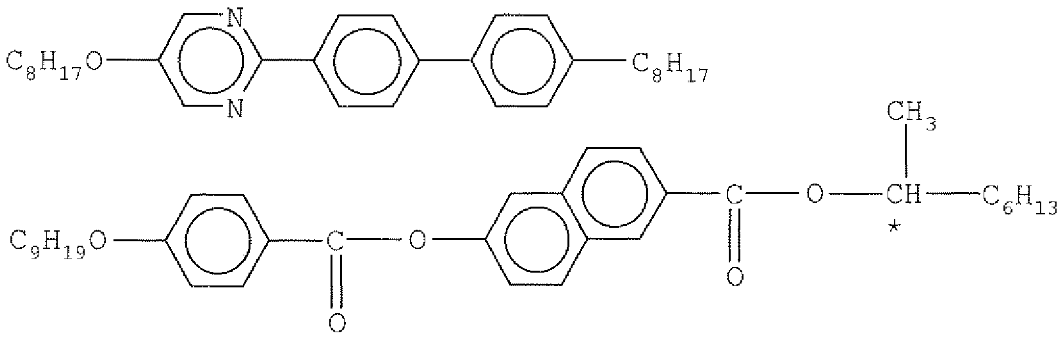

(Preferred liquid crystal material examples)

Among these, it is preferred to use the following liquid crystal material, in a case where the present invention is applied to a projection-type liquid crystal display.

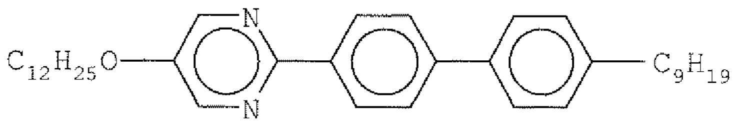

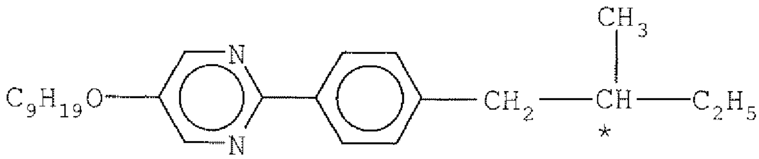

(Alignment film)

The alignment film usable in the present invention is not particularly limited as long as it can provide the above-mentioned specific"molecular initial alignment state". In other words, in the present invention, a suitable alignment film can appropriately be selected, in view of the physical property, electric or display performance, etc. For example, various alignment films as exemplified in publications may generally be used in the present invention. Specific preferred examples of such alignment films usable in the present invention are as follows.

Polymer alignment film: polyimides, polyamides, polyamide-imides

Inorganic alignment film: SiO2, SiO, Ta205, etc. (Preferred alignment film examples)

Among these, it is preferred to use the following alignment film, in a case where the present invention is applied to a projection-type liquid crystal display.

Inorganic alignment films

In the present invention, as the above-mentioned substrates, liquid crystal materials, and alignment films, it is possible to use those materials, components or constituents corresponding to the respective items as described in "Liquid Crystal Device Handbook" (1989), published by The Nikkan Kogyo Shimbun, Ltd. (Tokyo, Japan), as desired.

(Other constituents)

The other materials, constituents or components, such as transparent electrode, electrode pattern, micro-color filter, spacer, and polarizer, to be used for constituting the liquid crystal display according to the present invention, are not particularly limited, unless they are against the purpose of the present invention (i.e., as long as they can provide the above-mentioned specific "molecular initial alignment state"). In addition, the process for producing the liquid crystal display device which is usable in the present invention is not particularly limited, except the liquid crystal display device should be constituted so as to provide the above-mentioned specific "molecular initial alignment state". With respect to the details of various materials, constituents or components for constituting the liquid crystal display device, as desired, "Liquid Crystal Device Handbook" (1989), published by The Nikkan Kogyo Shimbun, Ltd. (Tokyo, Japan) may be referred to.

(Means for realizing specific initial alignment)

The means or measure for realizing such an alignment state is not particularly limited, as long as it can realize the above-mentioned specific'molecular initial alignment state". In other words, in the present invention, a suitable means or measure for realizing the specific initial alignment can appropriately be selected, in view of the physical property, electric or display performance, etc.

The following means may preferably be used, in a case where the present invention is applied to a large-sized TV panel, a small-size high-definition display panel, and a direct-view type display.

(Preferred means for providing initial alignment)

According to the present inventors' investigation and knowledge, the above-mentioned suitable initial alignment may easily be realized by using the following alignment film (in the case of baked film, the thickness thereof is shown by the thickness after the baking) and rubbing treatment. On the other hand, in ordinary ferroelectric liquid crystal displays, the thickness of the alignment film 3,000 A (angstrom) or less, and the strength of rubbing (i.e., contact length of rubbing) 0.3 mm or less.

Thickness of alignment film: preferably 4,000 A or more, more preferably 5,000 A or more (particularly, 6, 000 A or more)

Strength of rubbing (i.e., contact length of rubbing): preferably 0.3 mm or more, more preferably 0.4 mm or more (particularly, 0.45 mm or more)

The above-mentioned alignment film thickness and strength of rubbing may be measured, e.g., in a manner as described in Production Example appearing hereinafter

(Usable PSS-LCD; Another embodiment 1)

According to another embodiment, there is provided:

a liquid crystal device comprising: at least, a pair of substrates; a liquid crystal material disposed between the pair of substrates; and a pair of polarizing films disposed on the outside of the pair of substrates;

wherein one of the pair of polarizing films has a molecular initial alignment which is parallel or almost parallel with the alignment treatment direction for the liquid crystal material; the other of the pair of polarizing films has a polarizing absorption direction which is perpendicular to the alignment treatment direction for the liquid crystal material; and, the liquid crystal device shows an extinction angle under the absence of an externally applied voltage.

The liquid crystal display according to such an embodiment has an advantage that the extinction position thereof does not substantially have a temperature dependency, in addition to those as described above.

Therefore, in this embodiment, it is possible to make the temperature dependency of the contrast ratio relatively small.

In the above-mentioned relationship wherein the polarizing absorption axis direction of the polarizing film is substantially aligned with the alignment treatment direction of the liquid crystal material, the angle between the polarizing absorption axis direction of the polarizing film and the alignment treatment direction of the liquid crystal material may preferably be 2 degrees or less, more preferably 1 degree or less, particularly 0. 5 degree or less.

In addition, the phenomenon that the liquid crystal device shows an extinction position under the absence of an externally applied voltage may be confirmed, e. g., by the following method.

<Method of confirming extinction position>

A liquid crystal panel to be examined is inserted between a polarizer and an analyzer which are arranged in

cross-Nicole relationship, and the angle providing the minimum light quantity of the transmitted light is determined while the liquid crystal panel is being rotated. The thus determined angle is the angle of the extinction position.

(Usable PSS-LCD; Another embodiment 2)

According to a further embodiment, there is provided: a liquid crystal device comprising: at least, a pair of substrates; and a liquid crystal material disposed between the pair of substrates; wherein the current passing through the pair of substrates shows substantially no peak-shaped current, when a continuously and linearly changing voltage waveform is applied to the liquid crystal device.

The current passing through the pair of substrates does not substantially show a peak-shaped current, under the application of a voltage waveform of which strength is continuously and linearly changed, may be confirmed, e.g., by the following method. In this embodiment, "the current does not substantially show a peak-shaped current "means that, in the liquid crystal molecule alignment change, the spontaneous polarization does not participate in the liquid crystal molecule alignment change, at least in a direct manner. The liquid crystal display according to such an embodiment has an advantage, in addition to those as described above, that it enables sufficient liquid crystal driving, even in a device having the lowest electron mobility such as amorphous silicon TFT array device among active driving devices.

Even when the liquid crystal per se can exhibit a considerably high display performance, if the capacity thereof is relatively large, it is difficult to drive such a liquid crystal by using an amorphous silicon TFT array device having a limit on the electron mobility. As a result, it is actually impossible to provide high-quality display performance. Even in this case, in view of the ability of driving the liquid crystal, it is possible to provide sufficient display performance, by using low-temperature polysilicon and high-temperature polysilicon TFT array devices having a lager electron mobility than amorphous silicon; or single crystal silicon (silicon wafer) capable of providing the maximum electron mobility. On the other hand, the amorphous silicon TFT array is economically advantageous in view of the production cost. Further, when the size of the panel is increased, the economic advantage of the amorphous silicon TFT array is much greater than the other types of active devices.

<Method of confirming peak-shaped current>

A triangular wave voltage having an extremely low frequency of about 0.1 Hz is applied to a liquid crystal panel to be examined. The liquid crystal panel would sense such an applied voltage so that a DC voltage is increased and decreased almost linearly. When the liquid crystal in the panel shows a ferroelectric liquid crystal phase, the optical response, and charge transfer state are dependent on the polarity of the triangular wave voltage, but not substantially dependent on the crest value (or peak-to-peak value) of the triangular wave voltage. In other words, the due to the presence of the spontaneous polarization, the spontaneous polarization of the liquid crystal is coupled with the externally applied voltage, only when the polarity of the applied voltage is changed from negative to positive, or from positive to negative. When the spontaneous polarization is reversed, electric charges are temporarily transferred so as to generate a peak-shaped electric current in the inside of the panel. On the contrary, if the reverse of the spontaneous polarization does not occur, no peak-shaped electric current is observed, and the current shows a monotonous increase, decrease or a constant value.

Therefore, the polarization of the panel may be determined by applying a low-frequency triangular wave voltage to the panel and precisely measure the resultant current, to thereby determine the profile of the current wave form.

(Usable PSS-LCD; Another embodiment 3)

According to a further embodiment of the present invention, there is provided: a liquid crystal device wherein the liquid crystal molecular alignment treatment for the liquid crystal material is conducted in conjunction with a liquid crystal molecular alignment material providing a low surface pre-tilt angle.

In this embodiment, the pre-tilt angle may preferably be 1. 5 degrees or less, more preferably 1.0 degree or less (particularly 0.5 degree or less). The liquid crystal display according to such an embodiment has an advantage, in addition to those describe above, that it can provide uniform alignment in a wide area, and a wide view angle.

The reason why the wide view angle is provided is as follows.

In the liquid crystal molecule alignment according to the present invention, liquid crystal molecules may be moved within cone-like regions, and the electro-optical response thereof does not remain in the same plane. Generally, when such molecular movement out of the plane is caused, the incidence angle dependency of birefringence occurs, and the viewing angle is narrowed.

However, in the liquid crystal molecule alignment according to the present invention, the molecular optical axis of liquid crystal molecules may always be moved in the clockwise or counter-clockwise direction, symmetrically and at a high-speed, with respect of the top of cones, as shown in Fig. 14A. Due to the high-speed symmetrical movement, an

extremely symmetrical image may be obtained as a result of time-averaging.

Therefore, with respect to the vexing angle, this embodiment can provide images having high symmetry and a small angle dependency.

(Usable PSS-LCD; Another embodiment 4)

According to a further embodiment of the present invention, there is provided: a liquid crystal device wherein the liquid crystal material shows Smectic A phase to the ferroelectric liquid crystal phase sequence.

In this embodiment, the phenomenon that the liquid crystal material has a "Smectic A phase to the ferroelectric liquid crystal phase sequence can be confirmed, e.g., by the following method. The liquid crystal display according to such an embodiment has an advantage, in addition to those as described above, that it can provide a higher upper limit of the storage temperature therefor. More specifically, in a case where the upper limit of the storage temperature for the, liquid crystal display is intended to be determined, even when the temperature exceeds the transition temperature for the ferroelectric liquid crystal phase to Smectic A phase, it can return to the ferroelectric liquid crystal phase so as to restore the initial molecular alignment, unless the temperature exceeds the transition temperature for the smectic A phase to cholesteric phase.

<Method of confirming phase transition sequence>

The phase transition sequence of the smectic liquid crystal may be confirmed as follows.

Under a cross Nicole relationship, the temperature of a liquid crystal panel is lowered from the isotropic phase temperature. At this time, the buffing direction is made in parallel with the analyzer. As a result of the observation by a polarizing microscope, a birefringence change wherein a firework-like shape is changed into a round shape is first measured. When the temperature is further decreased, an extinction direction occurs in parallel with the buffing direction. When the temperature is further decreased, and the phase is converted into a so-called ferroelectric liquid crystal phase. In this phase, when the panel is rotated by an angle of 3-4 degree around in the vicinity of the extinction position, it is found that the transmitted light intensity is increased when the position is outside of the extinction position, along with a decrease in the temperature.

Herein, it is possible to confirm the helical pitch of a ferroelectric liquid crystal phase and the panel gap of the substrates, e. g., by the following method.

<Method of confirming helical pitch>

In a cell having substrates which have been buffed so as to provide alignment treatments in parallel with each other, a liquid crystal material is injected between panels having a cell gap which is at least five times the expected helical pitch. As a result, a striped pattern corresponding to the helical pitch appears in the display surface.

<Method of confirming panel gap>

Before the injection of a liquid crystal material, the panel gap may be measured by using a liquid crystal panel gap measuring device utilizing light interference.

Hereinbelow, the present invention will be described in more detail with reference to specific Examples.

EXAMPLES

<u>Example 1</u>

A PSS-LCD panel was prepared using a 0.7 mm-thick glass substrate having a round transparent electrode ITO with a diameter of 15 mm. This panel was measured for the electro-optical response when an arbitrary waveform was applied using the measurement environment illustrated in the block diagram of Fig. 18.

An arbitrary voltage waveform pattern produced by the arbitrary waveform producing software was transferred to the arbitrary waveform generating device, and the arbitrary waveform generating device applied a voltage to the LCD panel. The LCD panel was inserted between a polarizer and an analyzer disposed in 90° cross-Nicole arrangement, and a pulse wave (pulse width: 1m SEC, period: 16.7 mSEC, externally applied voltage: ±10 V, voltage) was applied thereto. At this time, as illustrated in the measurement results illustrated in Fig. 19, it was confirmed that the delay in electro-optical response was improved by applying a backward pulsed voltage of -10 V and a pulse width of 50 μSEC in the course of the voltage becoming 0 V from a +10 V voltage applied state.

Example 2

A PSS-LCD panel was prepared using a 0.7 mm-thick glass substrate having a round transparent electrode ITO with a diameter of 15 mm. This panel was measured for the electro-optical response by using the same measurement environment as in Example 1.

It was confirmed that as illustrated in Fig. 20, the electro-optical response for a backward pulsed voltage having such a wave height value of -10 V as making small the change with time of voltage (dV/dt) was delayed, but as illustrated in Fig. 21, when dV/dt was increased, the electro-optical response delay was improved.

Comparative Example 1

A PSS-LCD panel was prepared using a 0.7 mm-thick glass substrate having a round transparent electrode ITO with a diameter of 15 mm.

Using the same measurement environment as in Example 1, only a pulse wave (pulse width: 1m SEC, period: 16.7 mSEC, externally applied voltage: ±10 V, voltage) was applied to the panel without applying the present invention. In this case, as illustrated in Fig. 22, an electro-optical response delay in the case of low gray shade was confirmed.

INDUSTRIAL APPLICABILITY

As described in the forgoing pages, according to the present invention, there is provided a liquid crystal display device capable of effectively suppressing the reduction of contrast (particularly, the reduction of contrast in the case of low gray shade) even when the optical response speed is increased.

## Claims

**1.** A Liquid crystal device comprising: at least,
a liquid crystal element capable of operated at high-speed; and electric field-applying means for applying an electric field to the liquid crystal element; the liquid crystal element comprising, at least, a pair of substrates, and a liquid crystal material disposed therebetween;
wherein the electric field-applying means is capable of applying an electric field ($-T_{INT}$) in a reverse direction so as to cancel a difference ($T_{INT}$) depending upon relative directions between the applied electric field and aligned liquid crystal molecular axis in the liquid crystal element.

**2.** A liquid crystal device according to claim 1,
wherein the electric field-applying means is capable of applying a reverse electric field in the vicinity of the initial alignment state under the absence of external electric field.

**3.** A liquid crystal device according to claim 1 or 2, wherein the electric field-applying means is capable of controlling the rate of increase (dV/dt) in the reverse electric field with respect to time.

**4.** A liquid crystal device according to any one of claims 1 to 3, wherein the liquid crystal element is a liquid crystal element (PSS-LCD), which has a molecular initial alignment parallel or almost parallel to the alignment treatment direction for the liquid crystal material, and the liquid crystal material shows almost no spontaneous polarization which is perpendicular to the pair of substrates under the absence of an externally applied voltage.

**5.** A liquid crystal device according to claim 4,
wherein the orientation energy difference ($T_{INT}$) depending upon relative directions between the applied electric field and aligned liquid crystal molecular axis in the liquid crystal element is equal to an orientation energy difference which is generated due to the coupling of a quadrupole moment and an internal electric field in the liquid crystal element.

**6.** A liquid crystal device according to any one of claims 1 to 5, wherein the electric field-applying means comprises, at least:

a response speed analyzer for analyzing an electro-optical response speed of the liquid crystal element by utilizing transmitted light having passed through the liquid crystal element; and
an electric field application regulator for regulating a voltage to be applied to the liquid crystal element in response

to a signal from the response speed analyzer.

**7.** A liquid crystal device according to any one of claims 1 to 6, wherein the response speed analyzer comprises, at least, light-receiving means for measuring transmitted light having passed through the liquid crystal element.

**8.** A liquid crystal device according to any one of claims 1 to 7, wherein the electric field application regulator comprises, at least, a waveform generator for generating a voltage to be applied to the liquid crystal element.

**9.** A liquid crystal device according to claim 7 or 8, which further comprises a temperature controller for controlling the temperature of the light-receiving means.

**10.** A method of driving a liquid crystal device comprising, at least, a liquid crystal element and electric field-applying means for applying an electric field to the liquid crystal element; the liquid crystal element comprising, at least, a pair of substrates and a liquid crystal material disposed between the pair of electrodes;
wherein a reverse electric field ($-T_{INT}$) is applied from the electric field-applying means to the liquid crystal element, so as to cancel an orientation energy difference ($T_{INT}$) depending upon relative directions between the applied electric field and aligned liquid crystal molecular axis in the liquid crystal element.

**11.** A method of driving a liquid crystal device according to claim 10, wherein the orientation energy difference is canceled by applying a reverse electric field from the electric field-applying means in the vicinity of initial alignment state under the absence of external electric field.

**12.** A method of driving a liquid crystal device according to claim 10 or 11, wherein the orientation energy difference is canceled by controlling the rate of increase in the reverse electric field with respect to time (dV/dt) in the application of an electric field from the electric field-applying means.

Fig.1

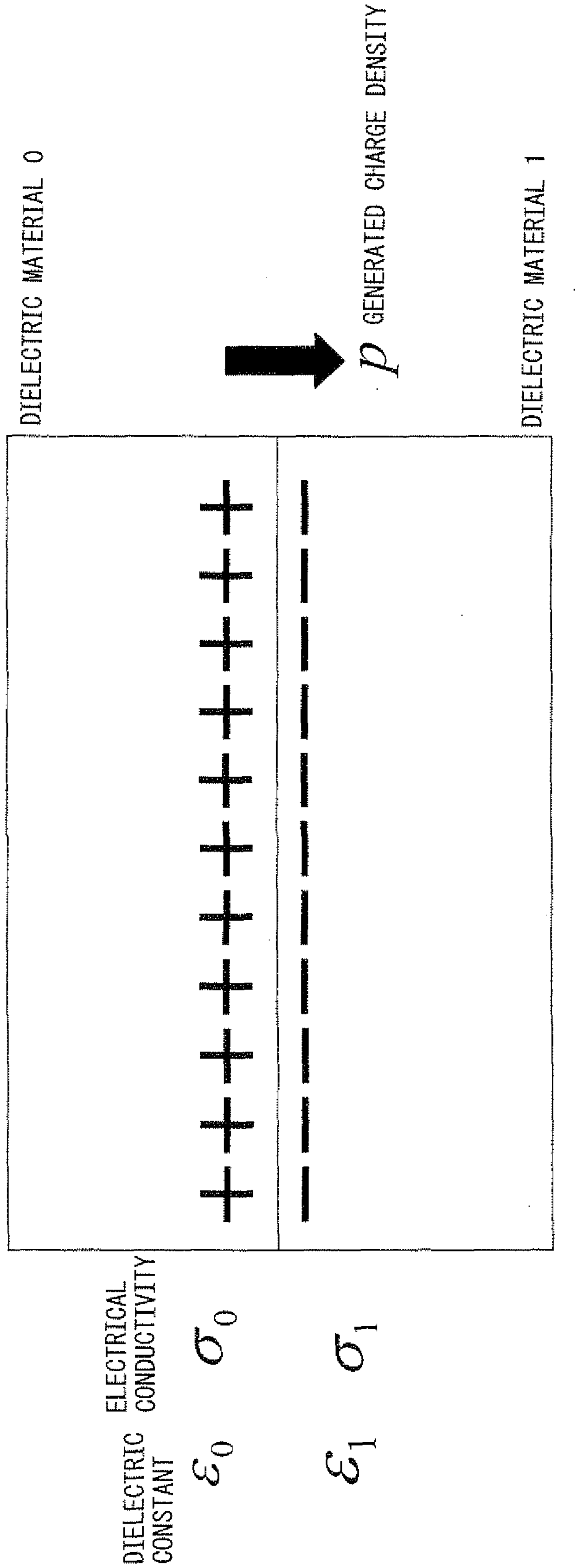
DIELECTRIC MATERIAL 0
DIELECTRIC MATERIAL 1
$p$ GENERATED CHARGE DENSITY
DIELECTRIC CONSTANT
ELECTRICAL CONDUCTIVITY
$\varepsilon_0$
$\sigma_0$
$\varepsilon_1$
$\sigma_1$

Fig.2

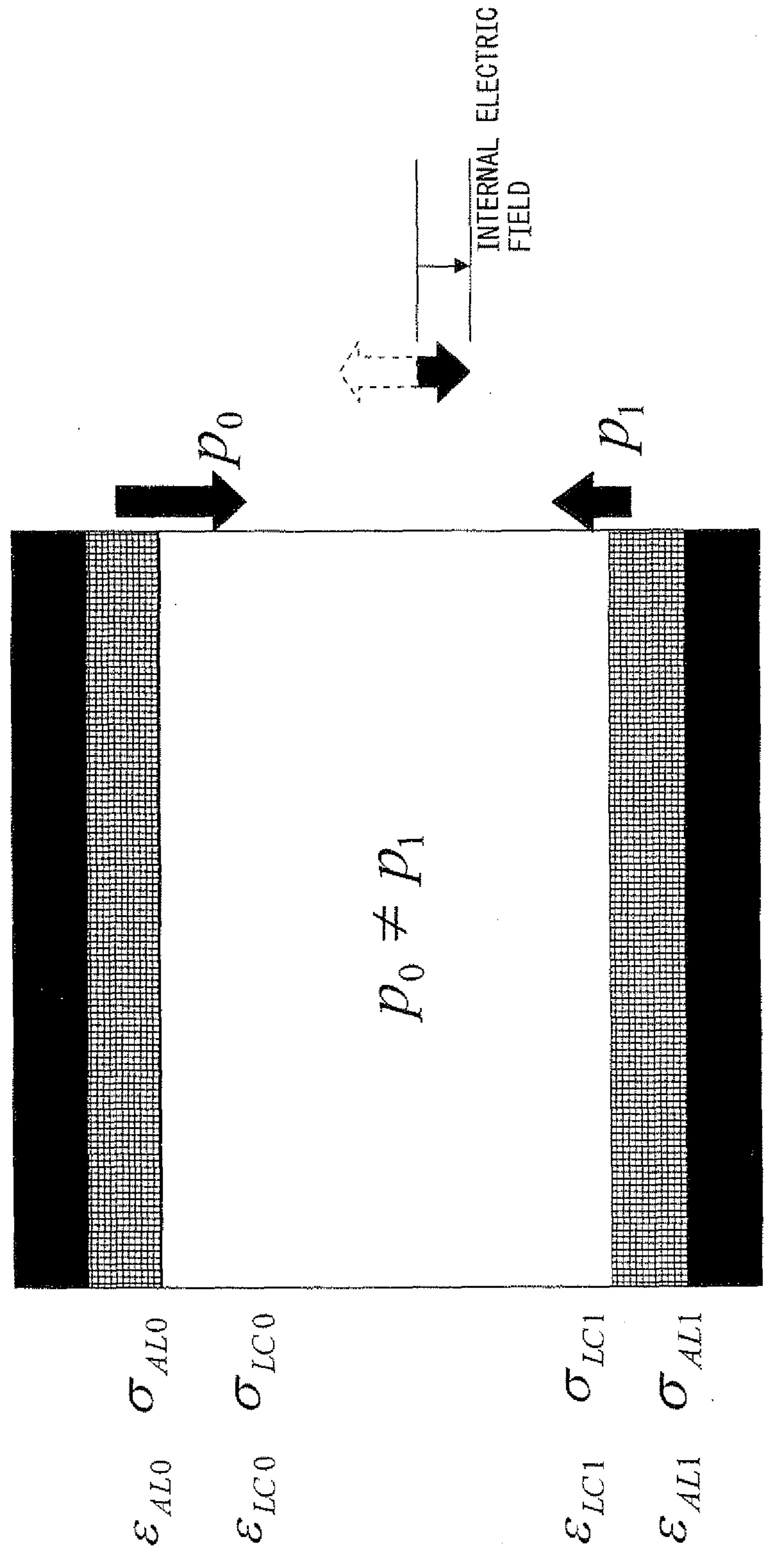
INTERNAL ELECTRIC FIELD
$p_0$
$p_1$
$p_0 \neq p_1$
$\sigma_{AL0}$
$\sigma_{LC0}$
$\sigma_{LC1}$
$\sigma_{AL1}$
$\varepsilon_{AL0}$
$\varepsilon_{LC0}$
$\varepsilon_{LC1}$
$\varepsilon_{AL1}$

Fig.3

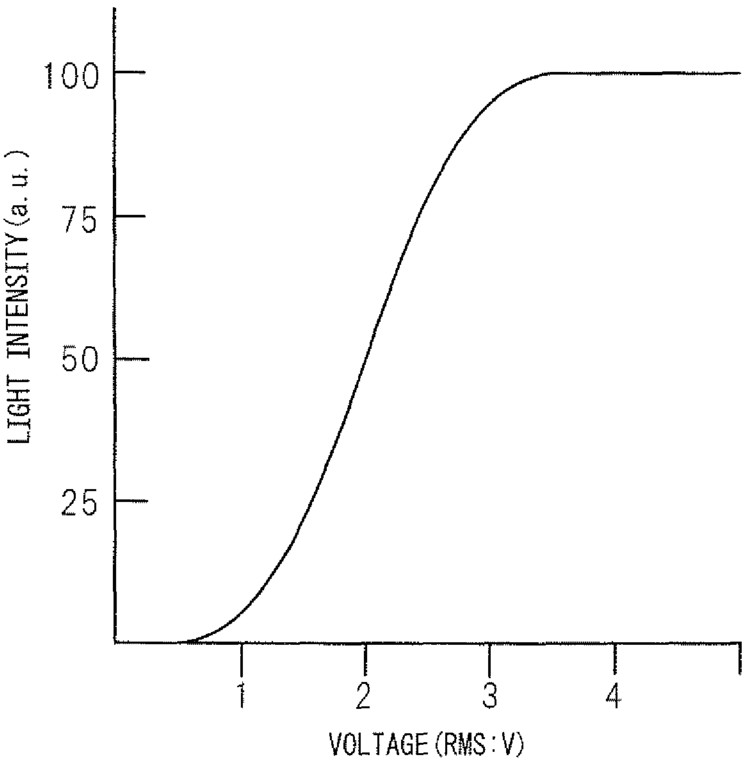

Fig.4

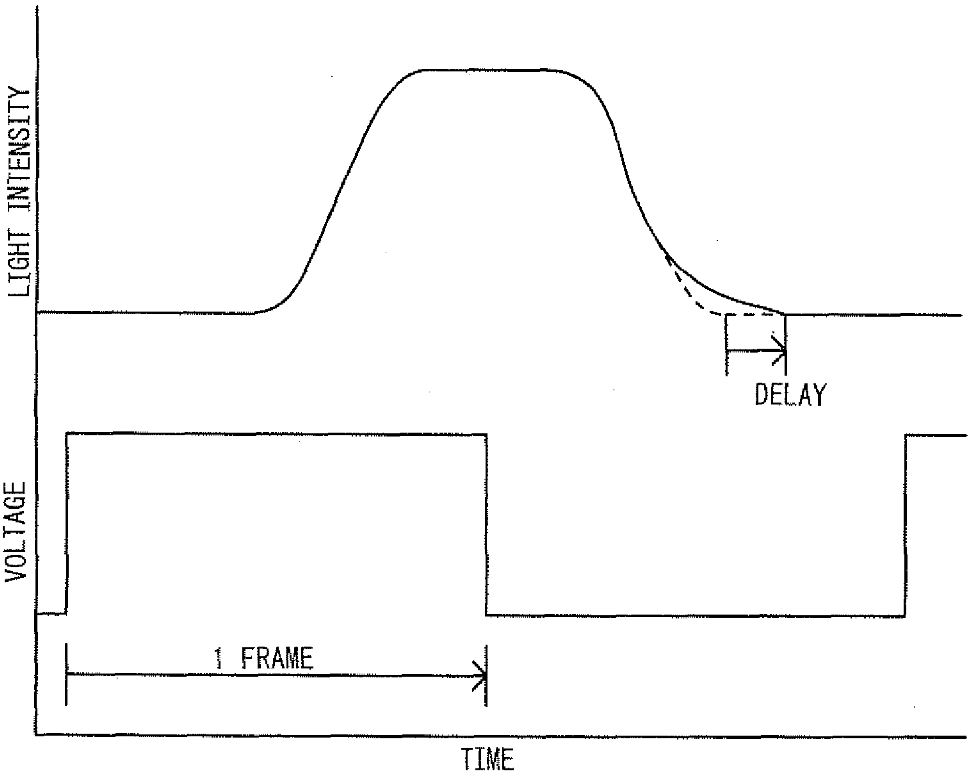

Fig.5

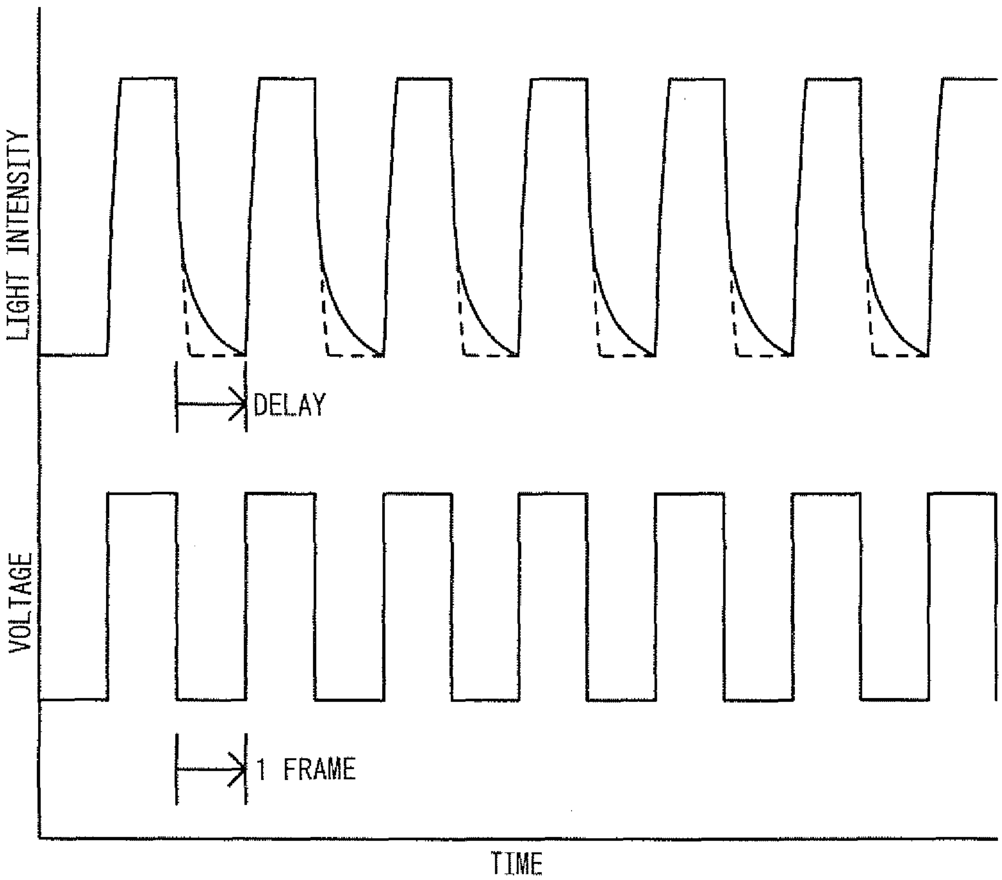

Fig.6

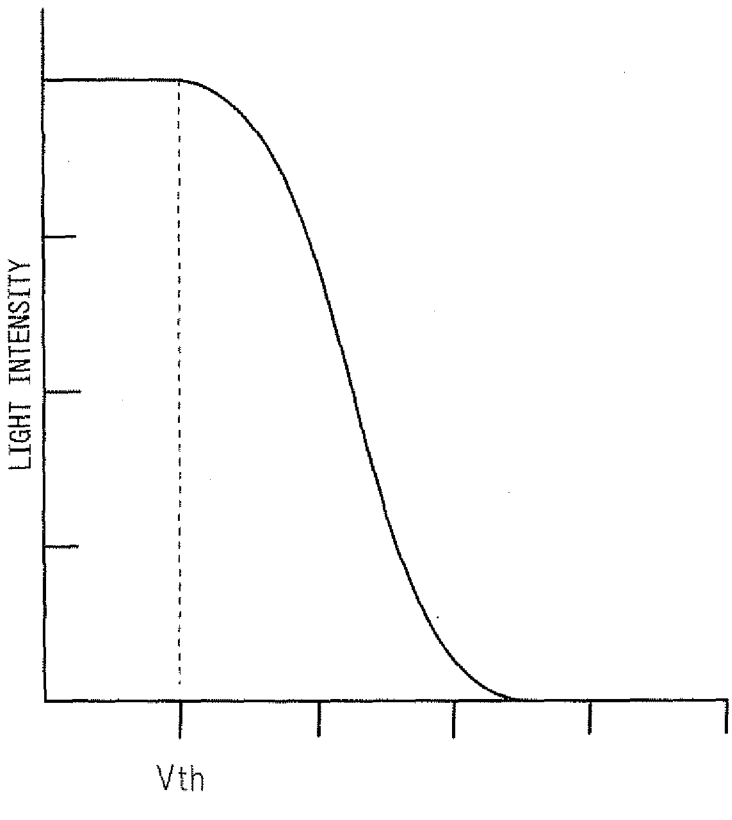

Fig.7

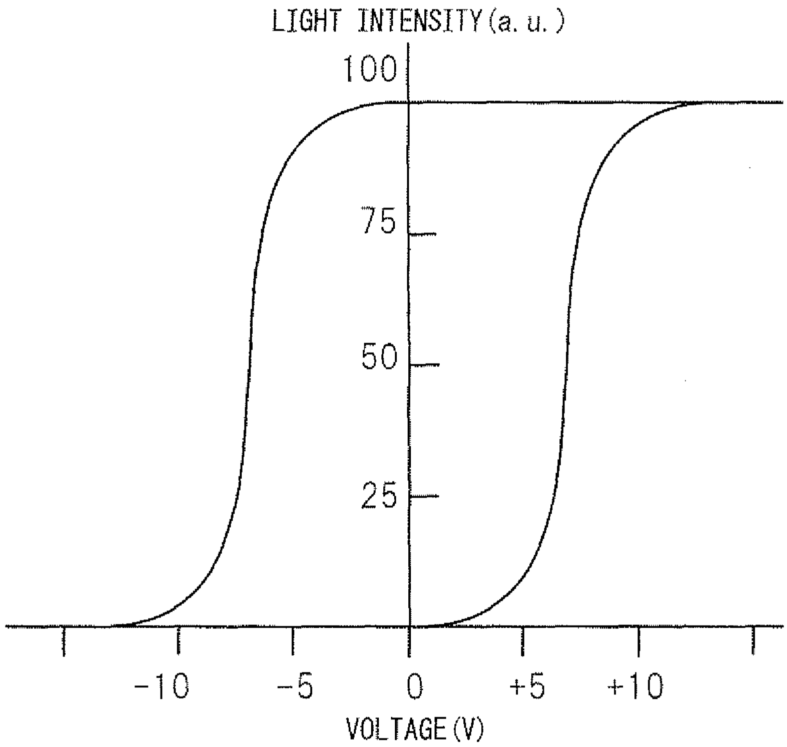

Fig.8

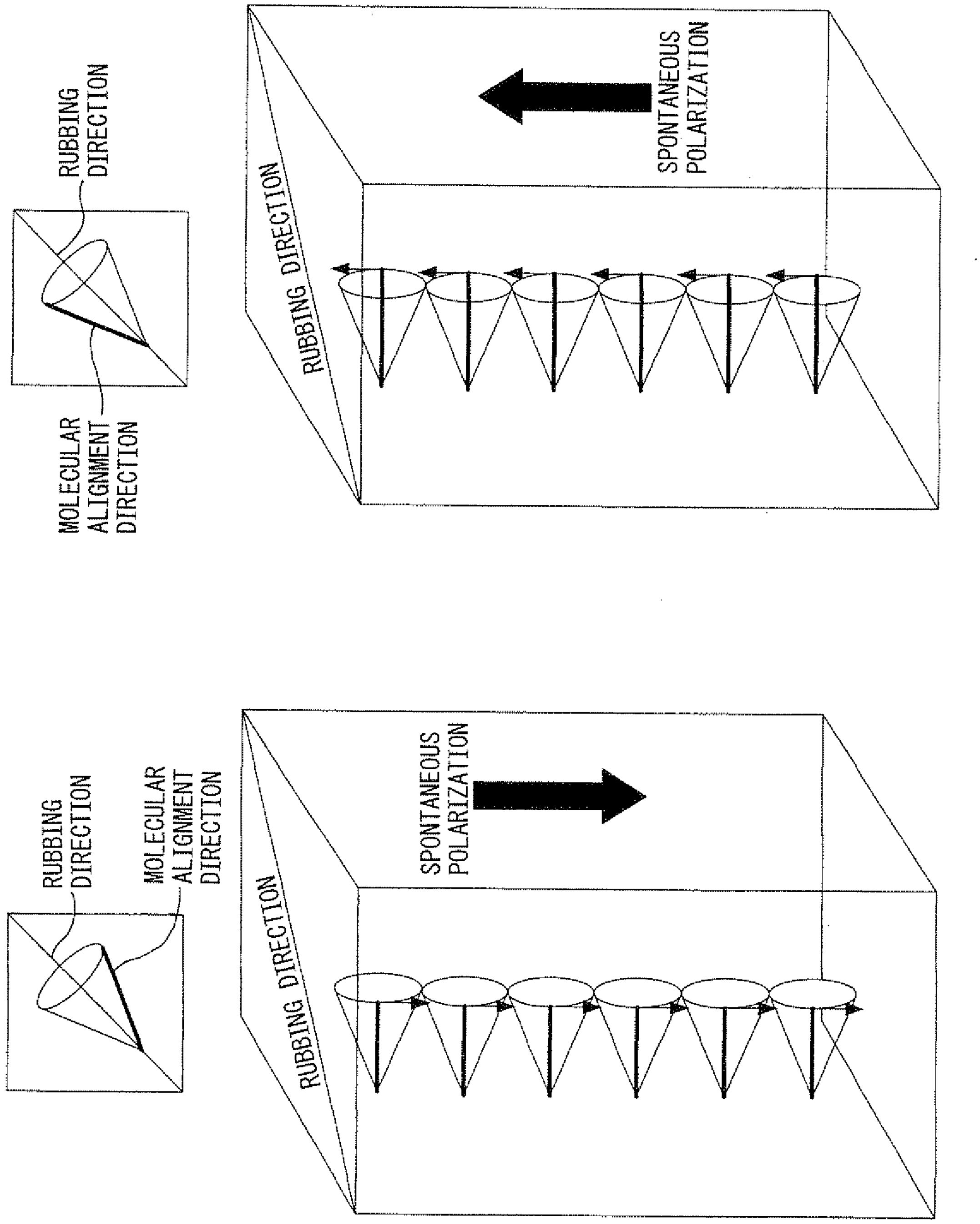
RUBBING DIRECTION
MOLECULAR ALIGNMENT DIRECTION
RUBBING DIRECTION
SPONTANEOUS POLARIZATION
RUBBING DIRECTION
MOLECULAR ALIGNMENT DIRECTION
RUBBING DIRECTION
SPONTANEOUS POLARIZATION

Fig.9

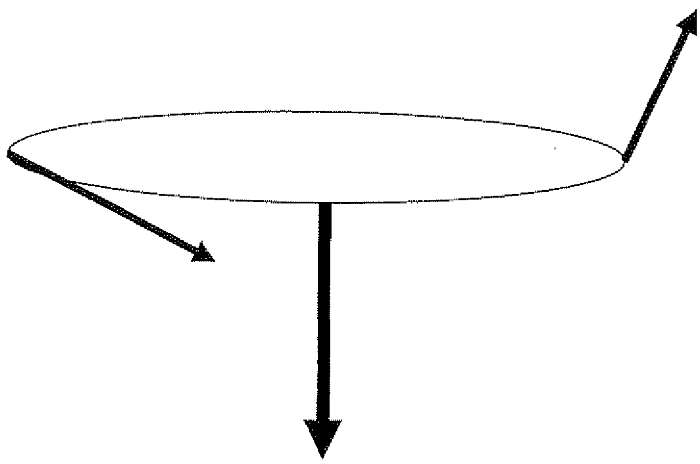

Fig.10

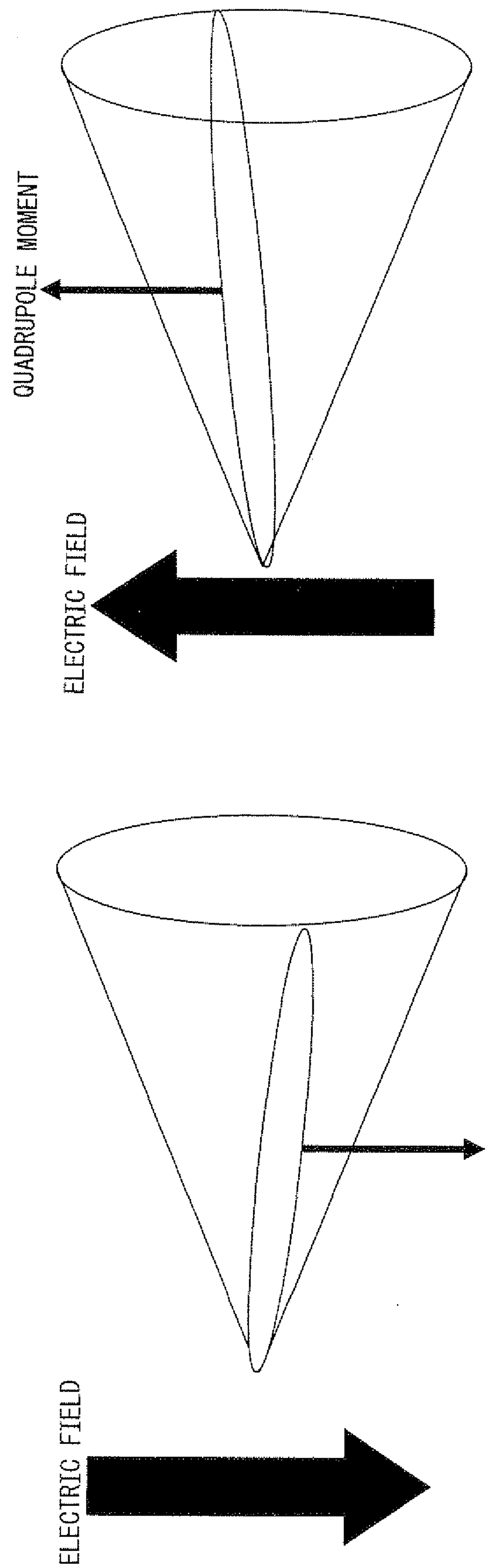
QUADRUPOLE MOMENT
ELECTRIC FIELD
QUADRUPOLE MOMENT
ELECTRIC FIELD

Fig.11

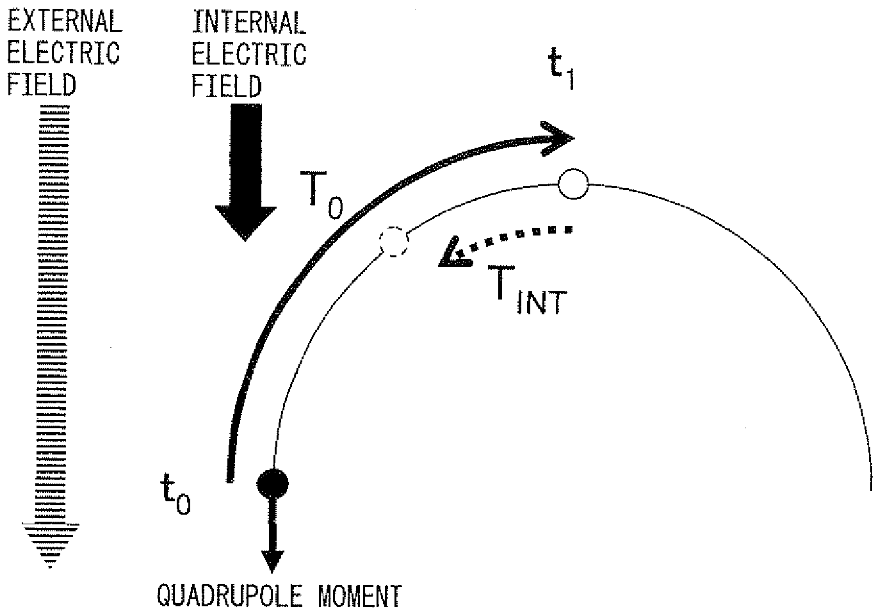
EXTERNAL ELECTRIC FIELD
INTERNAL ELECTRIC FIELD
$t_1$
$T_0$
$T_{INT}$
$t_0$
QUADRUPOLE MOMENT

Fig.12

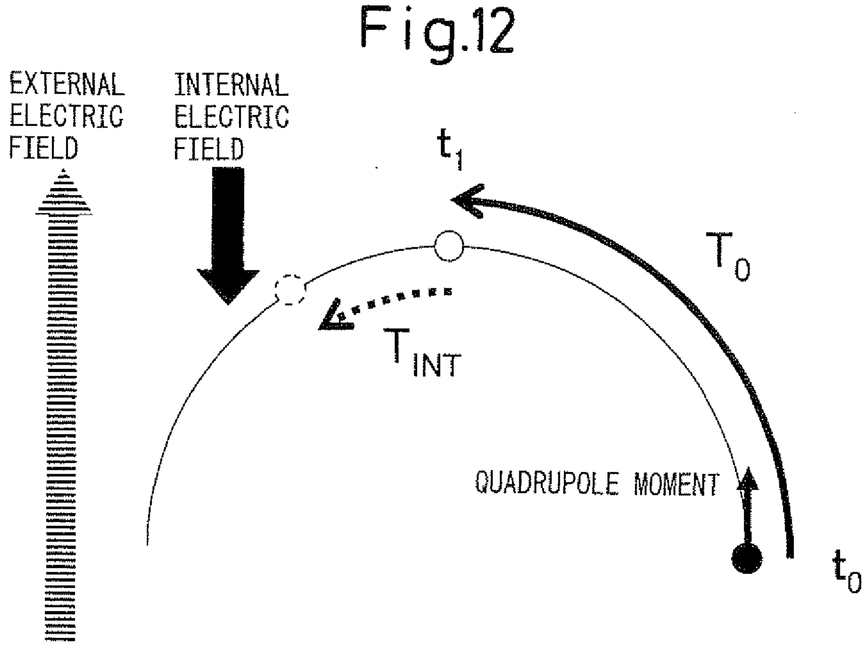
EXTERNAL ELECTRIC FIELD
INTERNAL ELECTRIC FIELD
$t_1$
$T_0$
$T_{INT}$
QUADRUPOLE MOMENT
$t_0$

Fig.13

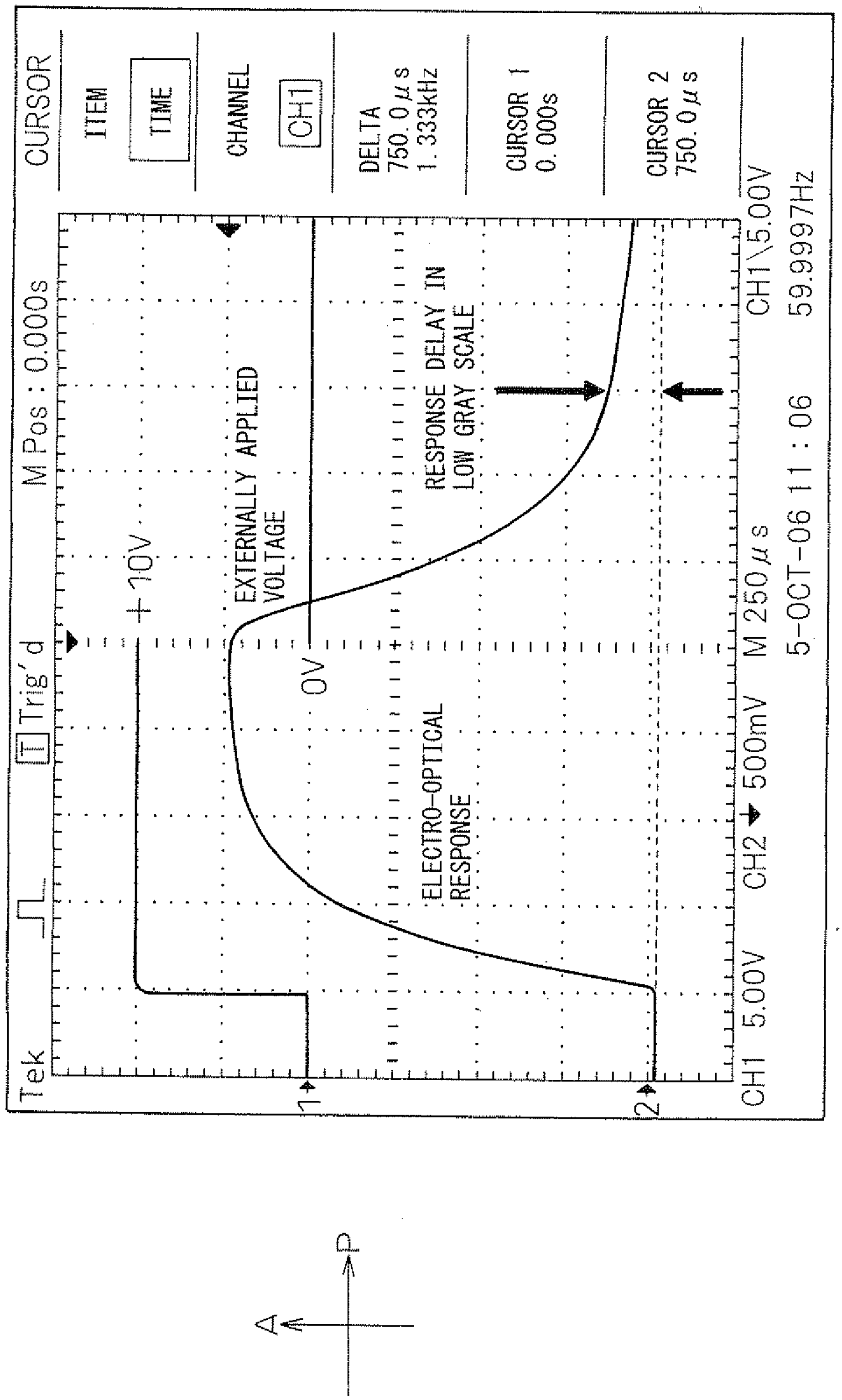
Tek
T Trig'd
M Pos : 0.000s
CURSOR
ITEM
TIME
CHANNEL
CH1
DELTA
750.0 μs
1.333kHz
CURSOR 1
0.000s
CURSOR 2
750.0 μs
+10V
0V
EXTERNALLY APPLIED
VOLTAGE
ELECTRO-OPTICAL
RESPONSE
RESPONSE DELAY IN
LOW GRAY SCALE
CH1 5.00V CH2 500mV M 250 μs CH1 \ 5.00V
5-OCT-06 11 : 06 59.9997Hz
A
P

Fig.14

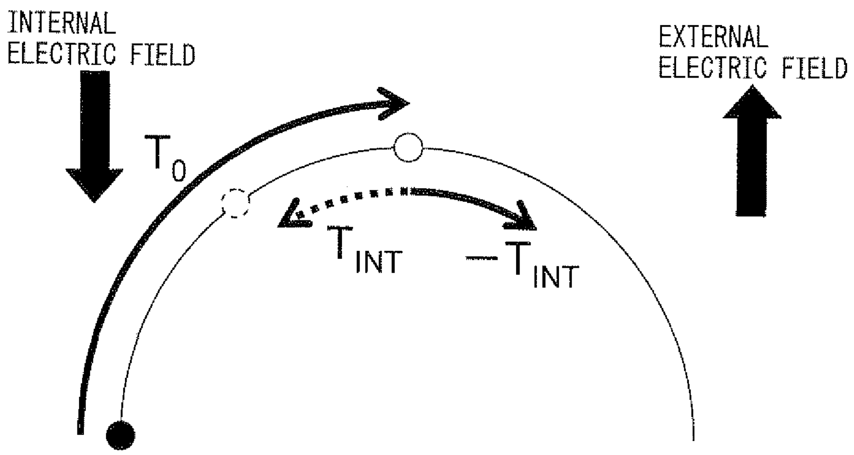
INTERNAL
ELECTRIC FIELD
EXTERNAL
ELECTRIC FIELD
$T_0$
$T_{INT}$
$-T_{INT}$

Fig.15

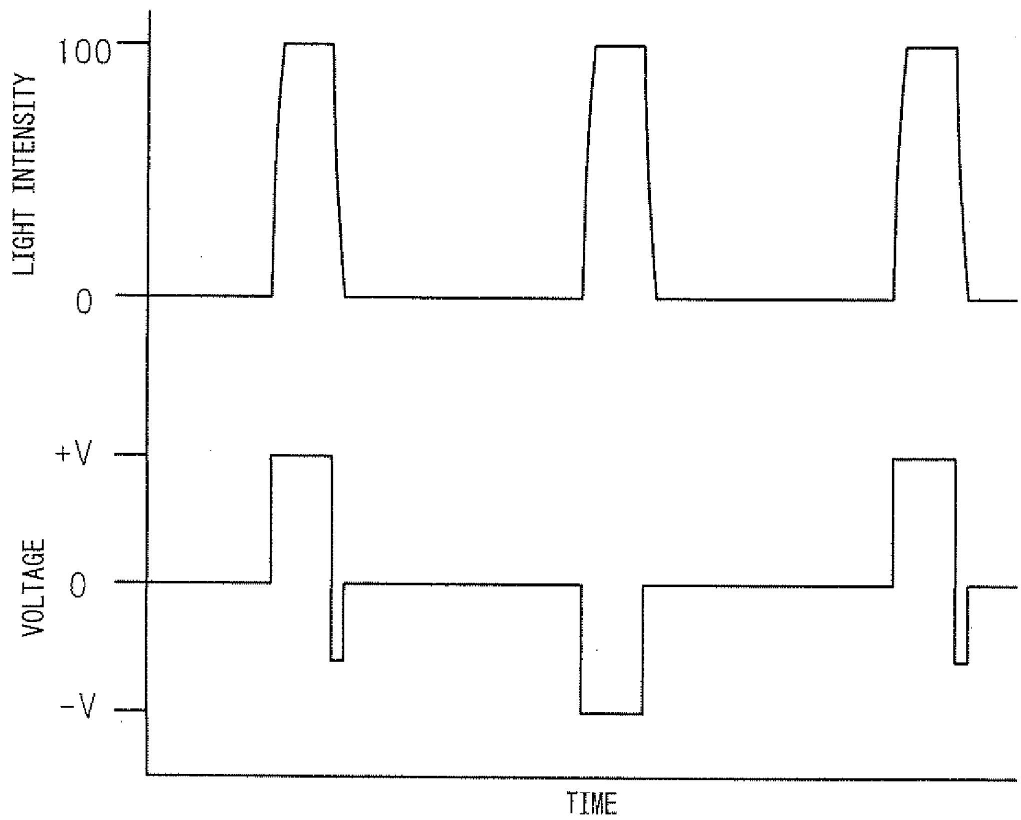
100
LIGHT INTENSITY
0
+V
VOLTAGE
0
-V
TIME

Fig.16

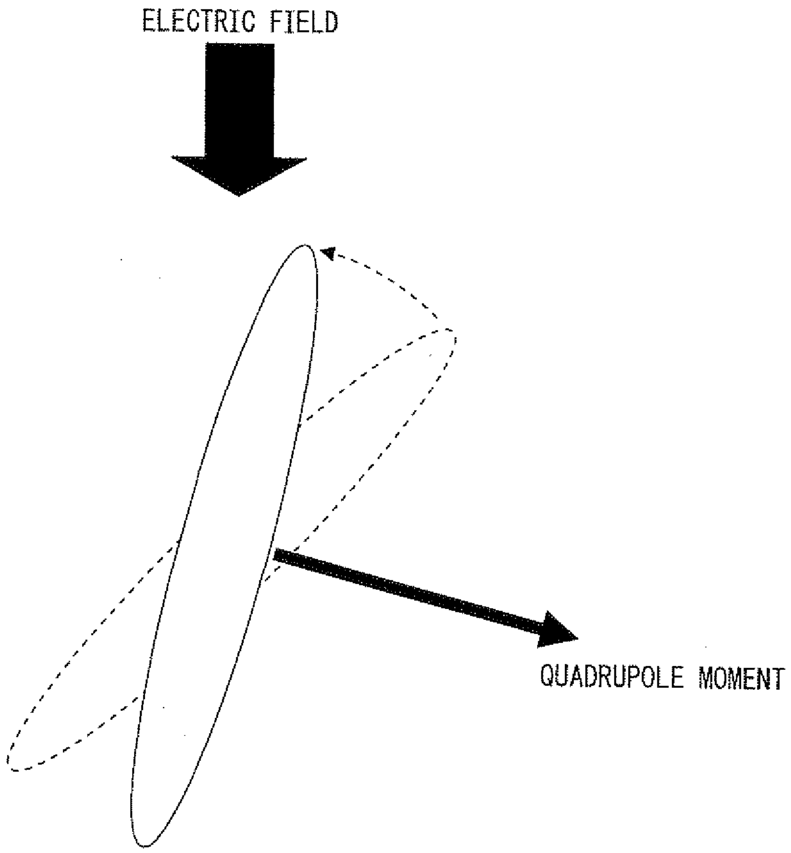

Fig.17

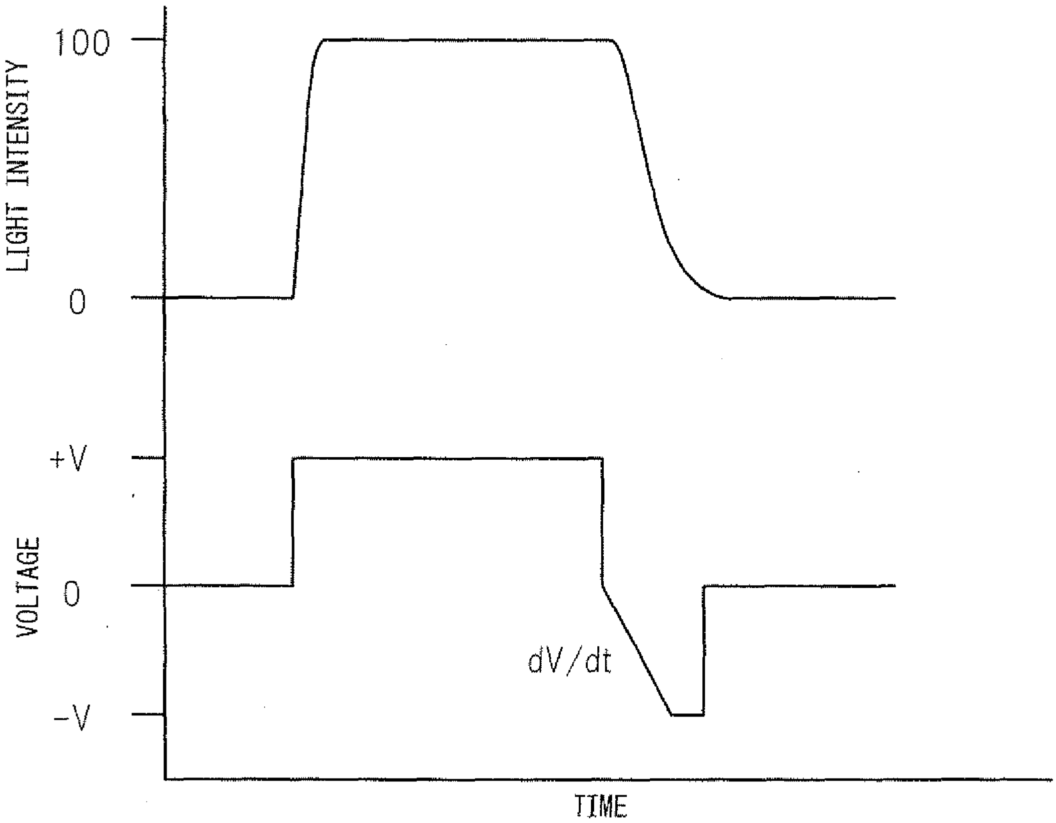

Fig.18

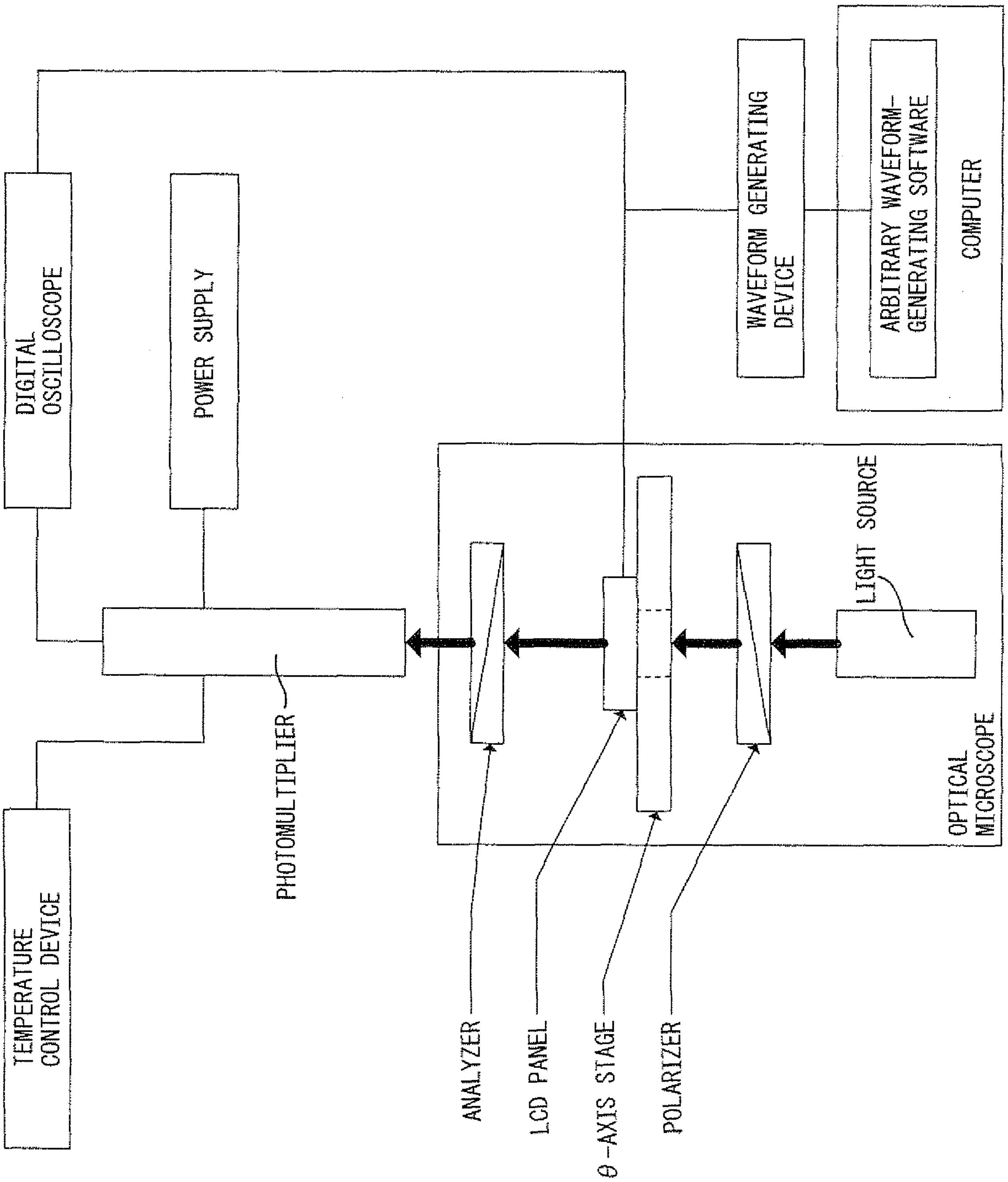
DIGITAL OSCILLOSCOPE
POWER SUPPLY
WAVEFORM GENERATING DEVICE
ARBITRARY WAVEFORM-GENERATING SOFTWARE
COMPUTER
LIGHT SOURCE
OPTICAL MICROSCOPE
PHOTOMULTIPLIER
TEMPERATURE CONTROL DEVICE
ANALYZER
LCD PANEL
θ-AXIS STAGE
POLARIZER

Fig.19

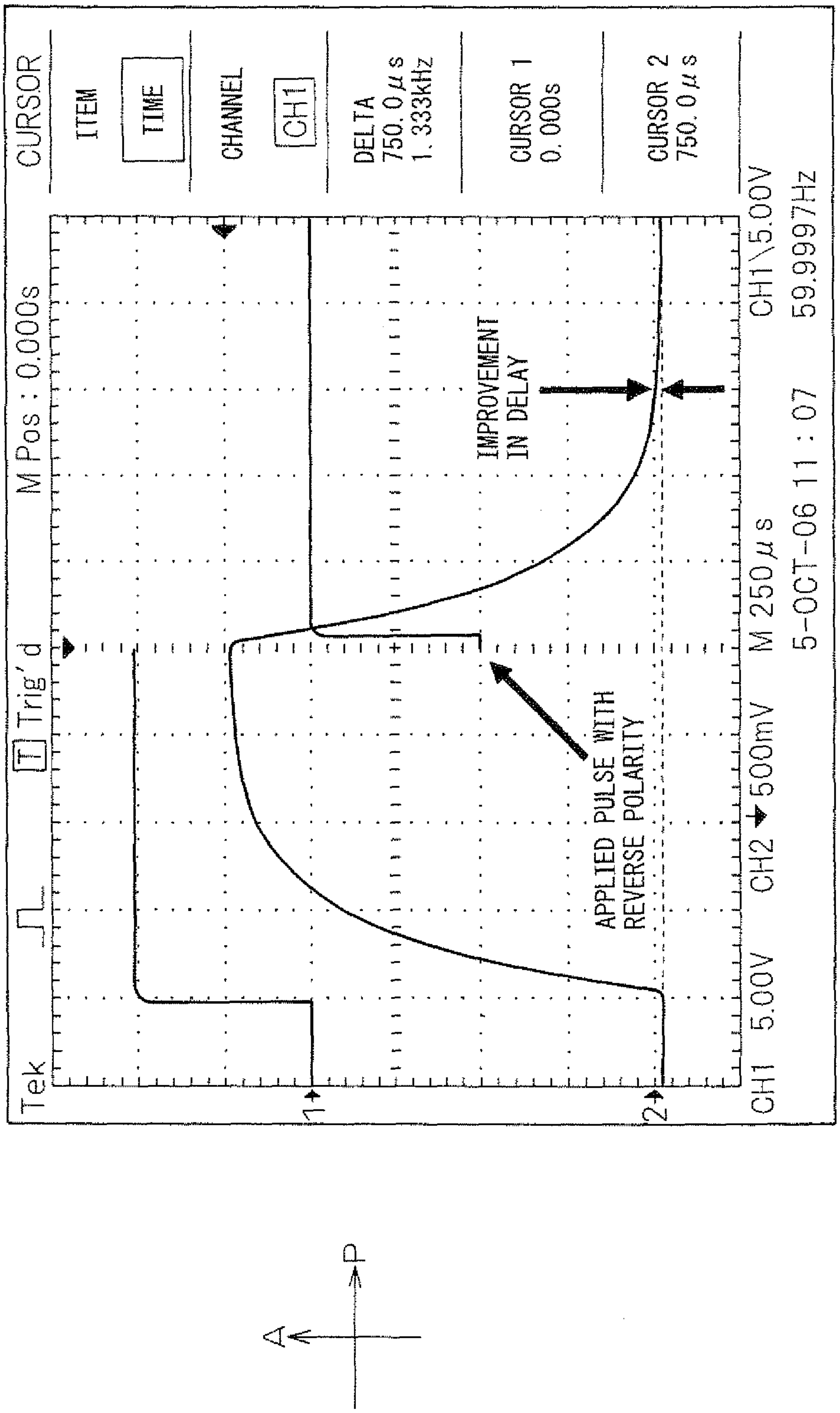
Tek
T Trig'd
M Pos : 0.000s
CURSOR
ITEM
TIME
CHANNEL
CH1
DELTA
750.0μs
1.333kHz
CURSOR 1
0.000s
CURSOR 2
750.0μs
IMPROVEMENT
IN DELAY
APPLIED PULSE WITH
REVERSE POLARITY
1
2
CH1 5.00V
CH2 500mV
M 250μs
CH1 \ 5.00V
5-OCT-06 11 : 07
59.9997Hz
A
P

Fig.20

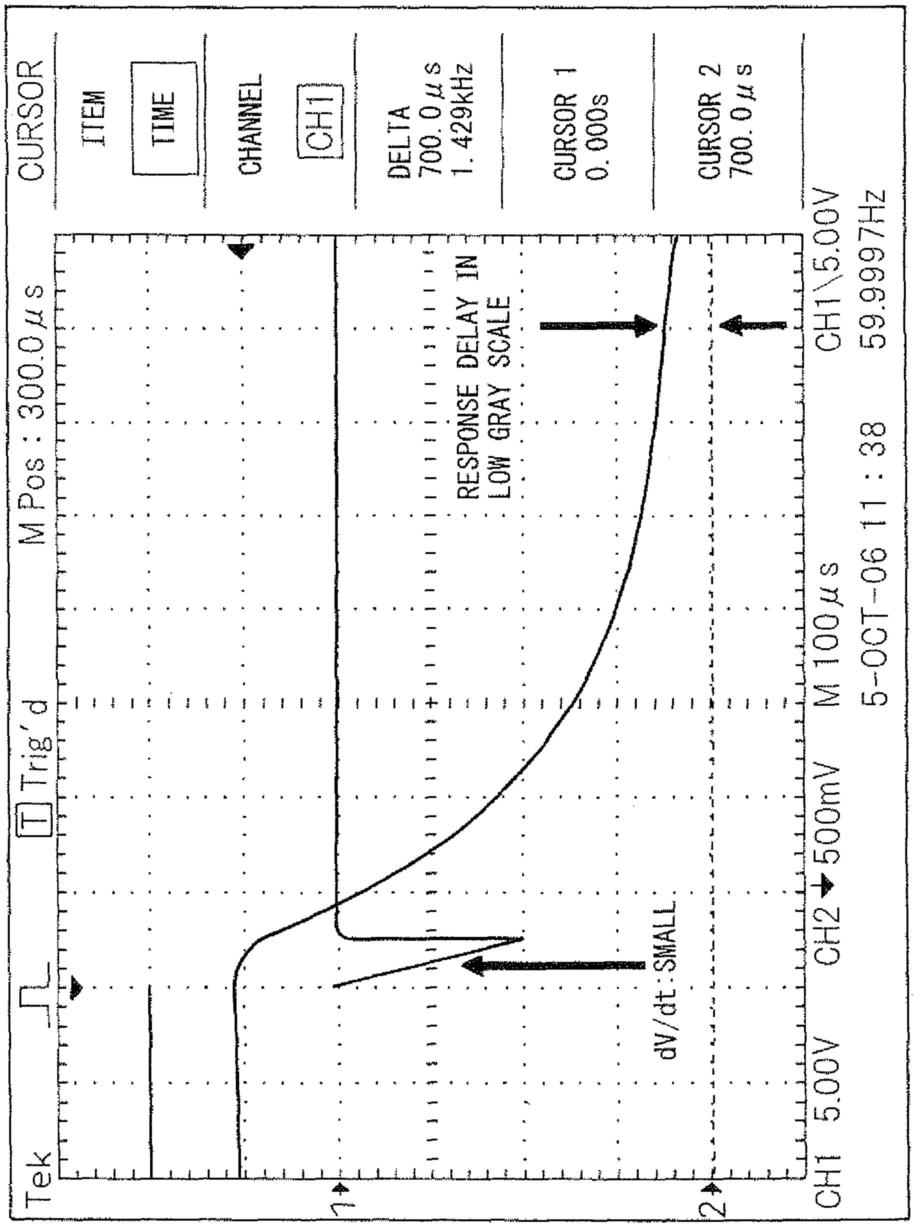
Tek
T Trig'd
M Pos : 300.0 μs
CURSOR
ITEM
TIME
CHANNEL
CH1
DELTA
700.0 μs
1.429kHz
CURSOR 1
0.000s
CURSOR 2
700.0 μs
RESPONSE DELAY IN
LOW GRAY SCALE
dV/dt:SMALL
CH1 5.00V CH2 500mV M 100 μs CH1 \ 5.00V
5-OCT-06 11 : 38 59.9997Hz

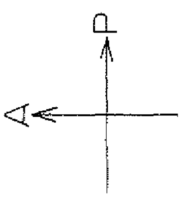
A
P

Fig.21

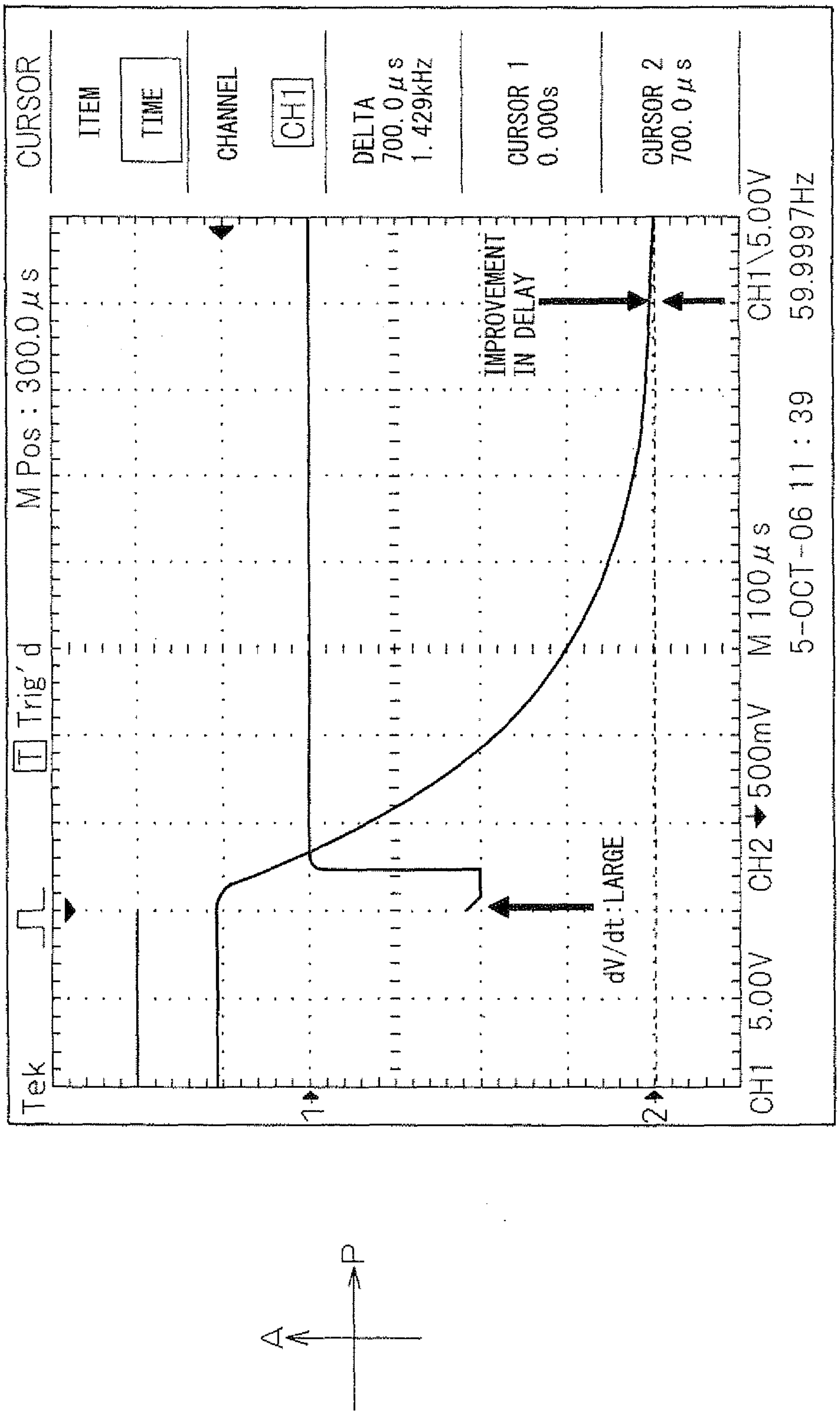
Tek
Trig'd
M Pos : 300.0 μs
CURSOR
ITEM
TIME
CHANNEL
CH1
DELTA
700.0 μs
1.429kHz
CURSOR 1
0.000s
CURSOR 2
700.0 μs
IMPROVEMENT IN DELAY
dV/dt:LARGE
CH1 5.00V
CH2 500mV
M 100 μs
CH1 \ 5.00V
5-OCT-06 11 : 39
59.9997Hz
A
P

Fig.22

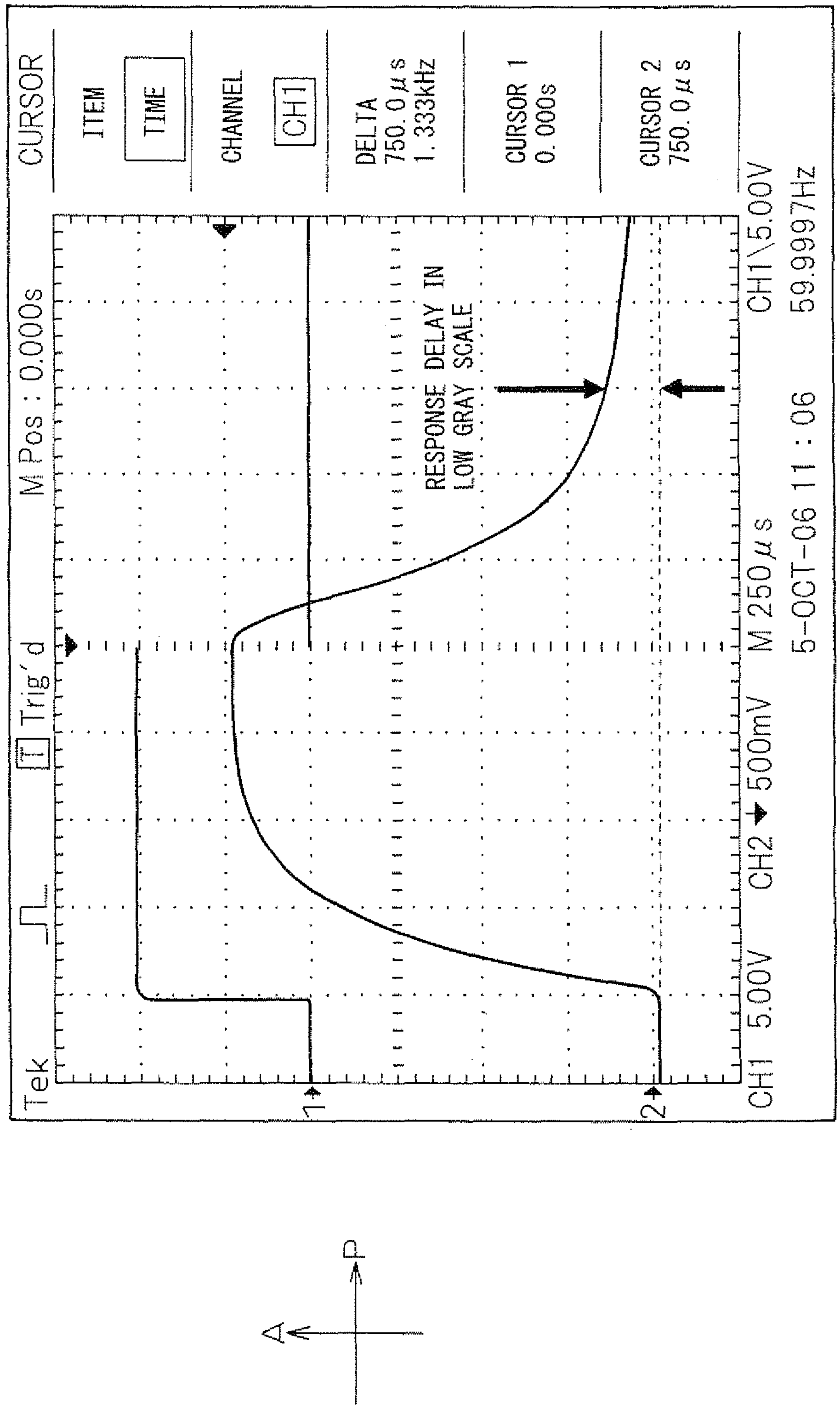
Tek
Trig'd
M Pos : 0.000s
CURSOR
ITEM
TIME
CHANNEL
CH1
DELTA
750.0μs
1.333kHz
CURSOR 1
0.000s
CURSOR 2
750.0μs
RESPONSE DELAY IN
LOW GRAY SCALE
CH1 5.00V CH2 500mV M 250μs CH1 \ 5.00V
5-OCT-06 11 : 06 59.9997Hz
A
P

Fig. 23

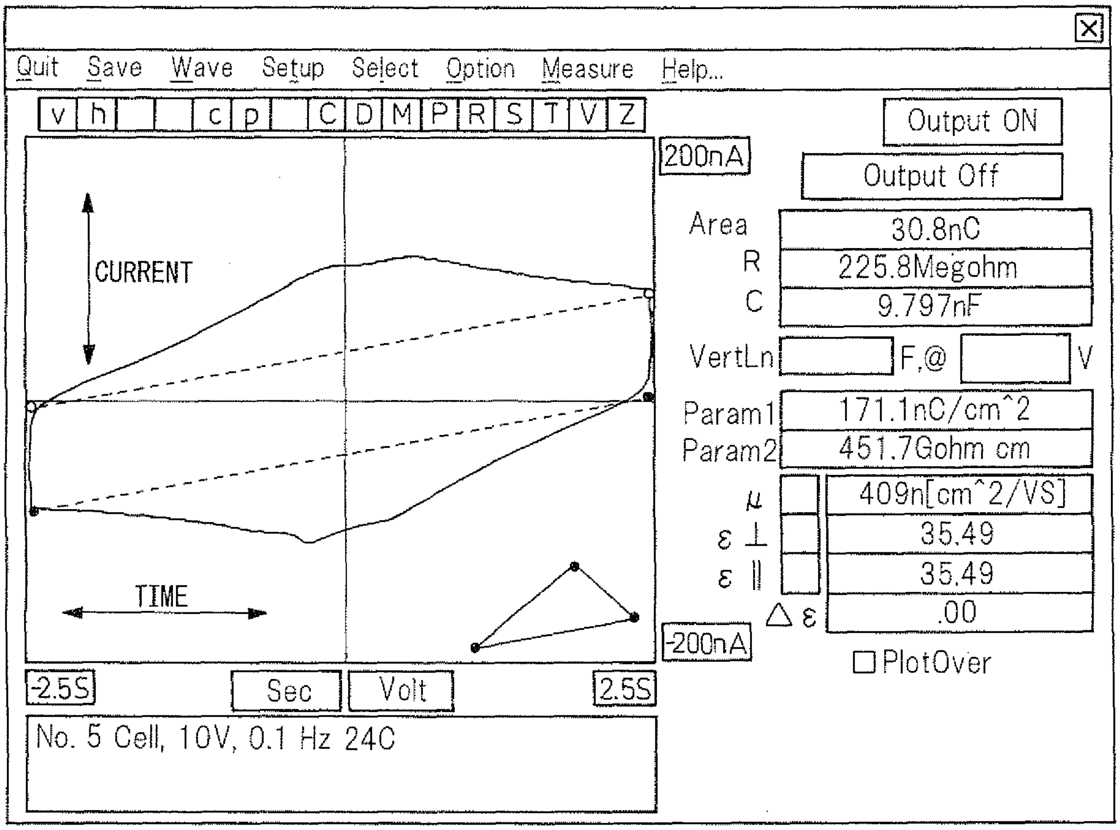


MEASUREMENT CONDITIONS: 24°C, 0.1Hz, 10V TRIANGULAR WAVE

Fig.24

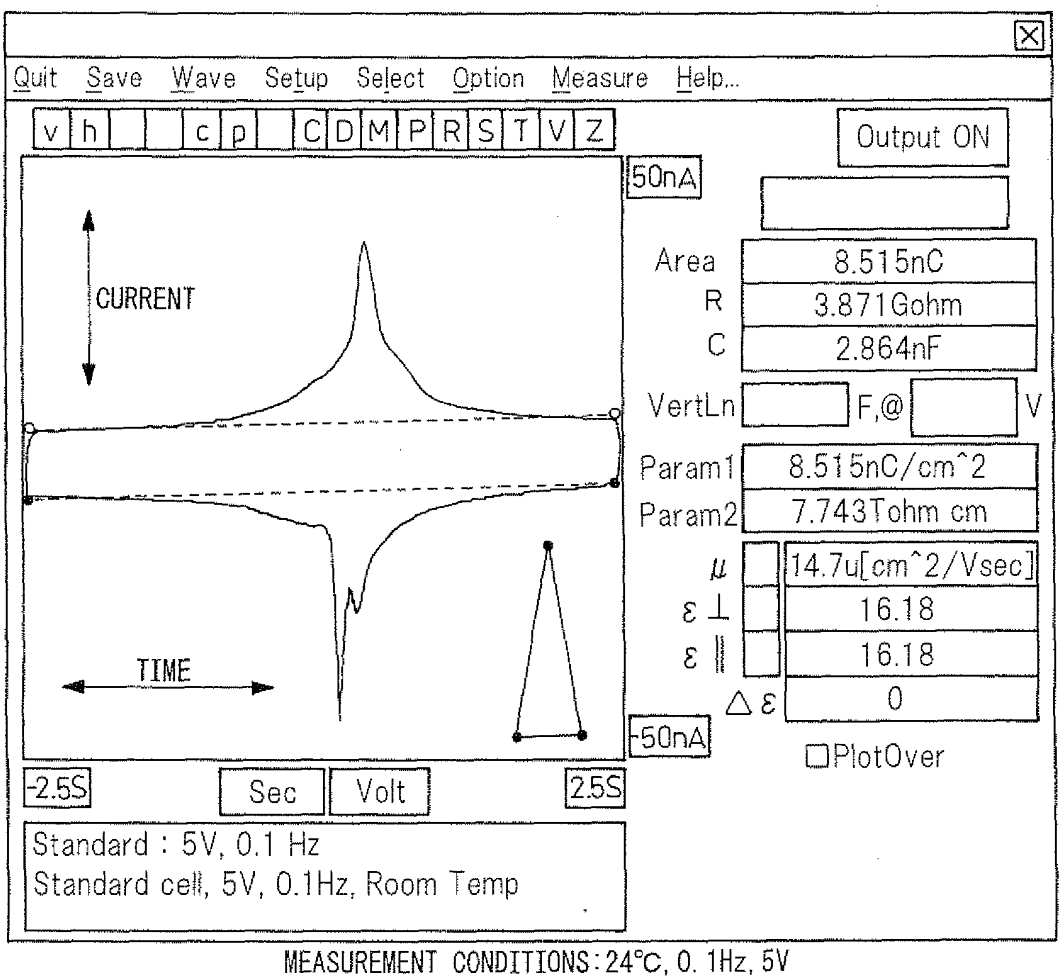


MEASUREMENT CONDITIONS: 24°C, 0. 1Hz, 5V

Fig.25

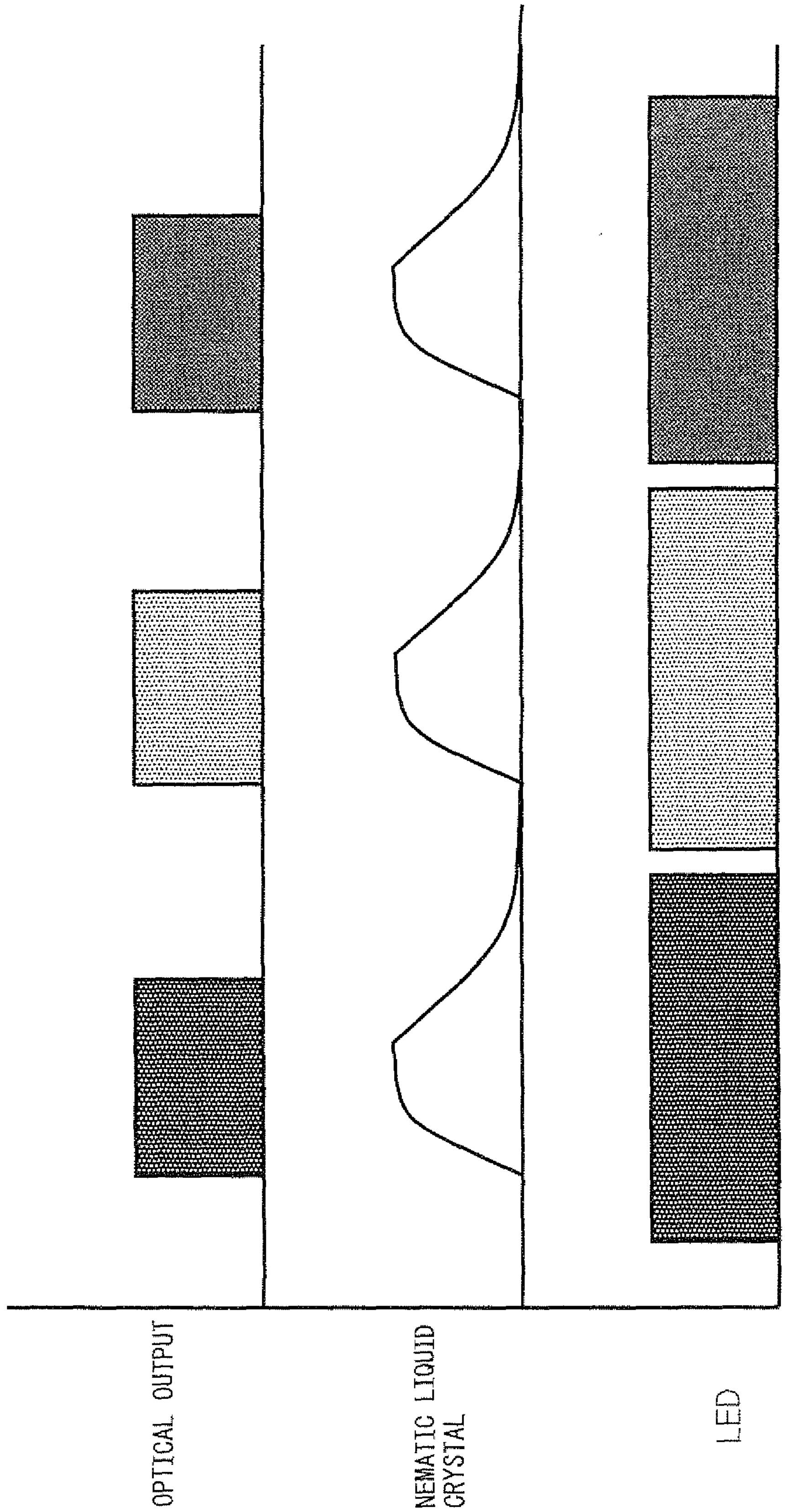

Fig. 26

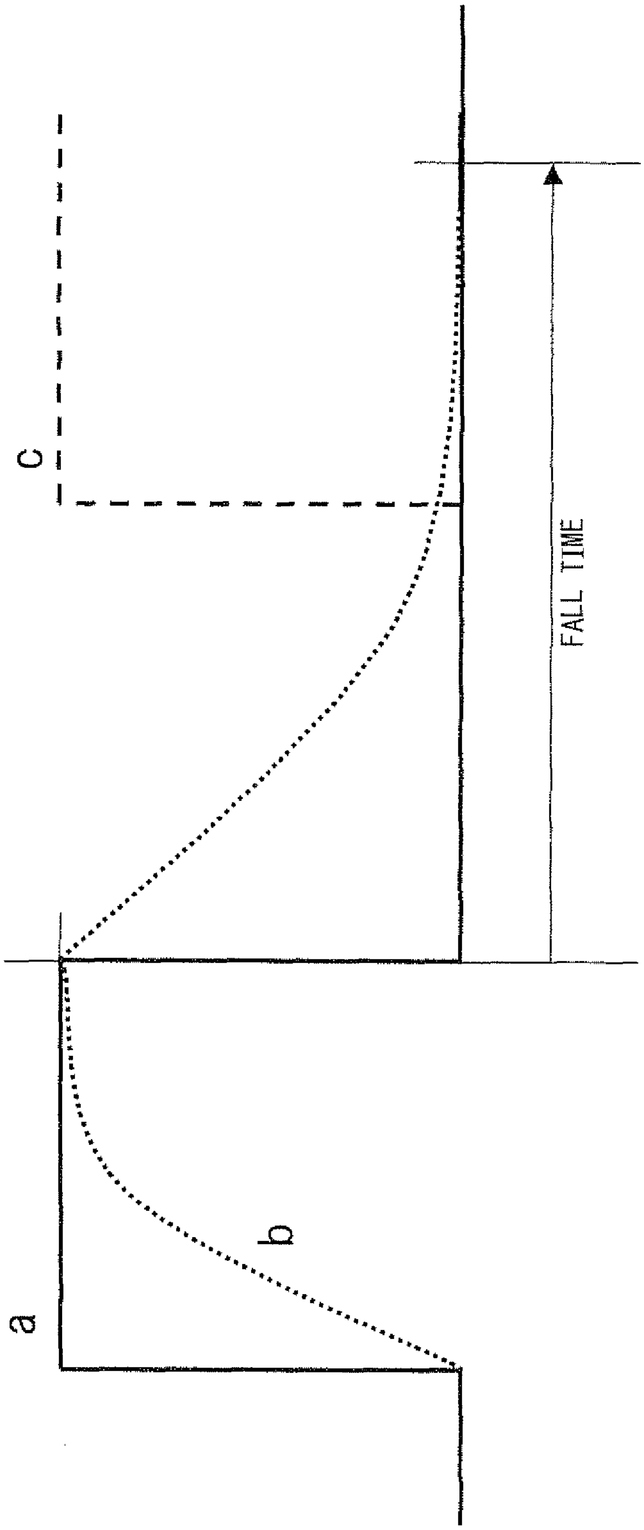

## INTERNATIONAL SEARCH REPORT

International application No.
PCT/JP2008/057050

A. CLASSIFICATION OF SUBJECT MATTER
*G02F1/133*(2006.01)i, *G02F1/141*(2006.01)i

According to International Patent Classification (IPC) or to both national classification and IPC

B. FIELDS SEARCHED

Minimum documentation searched (classification system followed by classification symbols)
G02F1/133, G02F1/141

Documentation searched other than minimum documentation to the extent that such documents are included in the fields searched
Jitsuyo Shinan Koho 1922-1996 Jitsuyo Shinan Toroku Koho 1996-2008
Kokai Jitsuyo Shinan Koho 1971-2008 Toroku Jitsuyo Shinan Koho 1994-2008

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br>Y<br>A | WO 01/073505 A1 (Citizen Watch Co., Ltd.),<br>04 October, 2001 (04.10.01),<br>Page 19, line 3 to page 20, line 29<br>& US 6804029 B2 & EP 1180714 A1 | 1-2,10-11<br>4-9<br>3,12 |
| Y<br>A | JP 2006-515935 A (Nano Loa, Inc.),<br>08 June, 2006 (08.06.06),<br>Full text; all drawings<br>& US 2004/0196428 A1 & WO 2004/063807 A2 | 4-5<br>3,12 |
| Y | JP 11-271709 A (Toshiba Corp.),<br>08 October, 1999 (08.10.99),<br>Par. No. [0044]; Fig. 4<br>(Family: none) | 6-9 |

☒ Further documents are listed in the continuation of Box C.   ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 02 July, 2008 (02.07.08) | 15 July, 2008 (15.07.08) |
| Name and mailing address of the ISA/<br>Japanese Patent Office<br>Facsimile No. | Authorized officer<br><br>Telephone No. |

Form PCT/ISA/210 (second sheet) (April 2007)

**INTERNATIONAL SEARCH REPORT**

International application No.
PCT/JP2008/057050

C (Continuation). DOCUMENTS CONSIDERED TO BE RELEVANT

| Category* | Citation of document, with indication, where appropriate, of the relevant passages | Relevant to claim No. |
|---|---|---|
| Y | JP 11-186148 A (Canon Inc.), 09 July, 1999 (09.07.99), Par. Nos. [0025] to [0032]; Fig. 5 (Family: none) | 9 |

Form PCT/ISA/210 (continuation of second sheet) (April 2007)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2006515935 A
- JP 6515935 A
- US 2004196428 A


### Non-patent literature cited in the description


- **A. Mochizuki.** Ferroelectric Liquid Crystal Display with Si Backplane. *International Workshop on Active Matrix Liquid Crystal Display in Tokyo,* 1999, 181-184
- **T.Yoshihara et al.** A Full-color FLC Display Based on Field Sequential Color with TFT''s. *INTERNATIONAL WORKSHOP ON ACTIVE MATRIX LIQUID CRYSTAL DISPLAY IN TOKYO,* 185-188
- **M. Okita.** Liquid Crystal fast response technology and its application. *Denshi Gijyutsu,* 1998, 8-12
- **T.Yoshihara et al.** A Full-color FLC Display Based on Field Sequential Color with TFT's. *International Workshop on Active Matrix Liquid Crystal Display in Tokyo,* 1999, 185-188
- **M. Okita.** Liquid Crystal fast response technology and its application. *Denshi Gijyutsu,* July 1998, 8-12
- Liquid Crystal Device Handbook. The Nikkan Kogyo Shimbun, Ltd, 1989